# NEUE EUROPÄISCHE PATENTSCHRIFT

(11) **EP 2 229 302 B2**
(45) Veröffentlichungstag und Bekanntmachung des Hinweises auf die Entscheidung über den Einspruch: **22.09.2021**
(45) Hinweis auf die Patenterteilung: 09.04.2014
(21) Anmeldenummer: 08870137.0
(22) Anmeldetag: 23.10.2008
(51) Int. Cl.: B60T 7/04, B60T 13/66, B60T 13/68, B60T 17/18, B60T 17/22, B60T 13/26

(54) **BREMSANLAGE FÜR EIN FAHRZEUG SOWIE BREMSPEDALEINRICHTUNG FÜR EINE DERARTIGE BREMSANLAGE**
BRAKE SYSTEM FOR A VEHICLE, AND BRAKE PEDAL DEVICE FOR SUCH A BRAKE SYSTEM
INSTALLATION DE FREINAGE POUR UN VÉHICULE, ET SYSTÈME DE PÉDALE DE FREIN POUR UNE TELLE INSTALLATION DE FREINAGE

(30) Priorität: 07.01.2008 DE 102008003379
(43) Veröffentlichungstag der Anmeldung: 22.09.2010
(73) Patentinhaber: ZF CV Systems Hannover GmbH, 30453 Hannover (DE)
(72) Erfinder: BEIER, Peter, 31515 Wunstorf (DE); BENSCH, Uwe, 30161 Hannover (DE); BROCKMANN, Christoph, 30966 Hemmingen (DE); BRUNS, Gerhard, 30451 Hannover (DE); FÖRSTER, Henning, 31171 Nordstemmen (DE); JANTZ, Olaf, 30451 Hannover (DE); ROSENDAHL, Hartmut, 30167 Hannover (DE); STRACHE, Wolfgang, 30966 Hemmingen (DE); WILLMS, Jens, 30926 Seelze (DE)
(74) Vertreter: Wasiljeff, Johannes M.B.
(86) Internationale Anmeldenummer: PCT/EP2008/008956
(87) Internationale Veröffentlichungsnummer: WO 2009/086855

(56) Entgegenhaltungen:
- EP-A- 1 533 227
- WO-A1-99/26822
- WO-A1-2006/125581
- DE-A1- 10 336 611
- DE-A1- 19 916 434
- DE-A1- 19 954 284
- US-A- 4 121 873
- US-A1- 2004 108 769

## Beschreibung

Die Erfindung betrifft eine Bremsanlage für ein Fahrzeug, insbesondere Nutzfahrzeug, mit einer Betriebsbremseinrichtung zur Bereitstellung einer Betriebsbremsfunktion zum Bremsen des Fahrzeugs und einer Feststellbremseinrichtung zur Bereitstellung einer Feststellbremsfunktion unabhängig von der Betriebsbremseinrichtung.

Eine derartige Bremsanlage ist bspw. aus DE 103 36 611 A1 bekannt. Bei derartigen Bremsanlagen sind regelmäßig mehrere pneumatisch betriebene Betriebsbremskreise vorgesehen, bspw. ein erster Betriebsbremskreis für die Räder der Vorderachse und ein zweiter Betriebsbremskreis für die Räder der Hinterachse. Die den Radbremsen zugeordneten Bremszylinder werden pneumatisch betätigt. Der dazu notwendige Druck wird von einem dem jeweiligen Bremskreis zugeordneten Druckluftvorratsbehälter bereitgestellt. Der auf diese Weise bereitgestellte Bremsdruck wird mittels entsprechender elektropneumatischer Bremssteuermodule ausgesteuert.

Bei elektronischen Bremssystemen erhalten diese Bremssteuermodule u.a. elektrische Signale von einer elektropneumatischen Bremspedaleinrichtung, welche einen elektrischen und einen pneumatischen Teil aufweist. Die elektrischen Signale werden in weitere elektrische Steuersignale zum Steuern von elektromagnetischen Ventilen umgesetzt, mittels denen die Bremsdruckzumessung erfolgt.

Üblicherweise ist ein erster Betriebsbremskreis für die Räder der Vorderachse vorgesehen, der ein entsprechendes Vorderachsbremssteuermodul aufweist. In entsprechender Weise ist ein zweiter Betriebsbremskreis für die Räder der Hinterachse eines Fahrzeugs mit einem Hinterachsbremssteuermodul vorgesehen.

Da jedoch insbesondere die elektrischen bzw. elektronischen Komponenten eines derartigen elektronischen Bremssystems ausfallen können, muss eine derartige Bremsanlage derart ausgebildet sein, dass sie auch bei Ausfall dieser elektrischen bzw. elektronischen Komponenten das Fahrzeug sicher zum Stehen bringen kann.

Daher weisen herkömmliche Bremspedaleinrichtungen neben den o. g. elektrischen bzw. elektronischen Komponenten auch pneumatische Komponenten auf. Mittels der Bremspedaleinrichtung wird auf diese Weise zugleich ein pneumatischer Redundanzdruck erzeugt, der bei Ausfall des elektrischen bzw. elektronischen Teils eines elektronischen Bremssystems über das pneumatische Teilsystem das Fahrzeug sicher einbremsen kann.

Darüber hinaus weisen derartige Bremsanlagen eine Feststellbremseinrichtung auf. Hierzu sind wenigstens die Räder einer Achse, regelmäßig der Hinterachse, mit Federspeicherbremszylindern, genauer gesagt mit kombinierten Federspeicher-/Membranbremszylindern, ausgebildet. Sofern der Federspeicherteil entlüftet ist, legt eine Speicherfeder die Bremse ein. So kann das Fahrzeug auch im drucklosen Zustand sicher gehalten werden. Im Fahrbetrieb wird hingegen der Federspeicherteil belüftet, so dass die Speicherfeder die Bremse nicht mehr anlegt. In diesem Betriebszustand kann dann das Fahrzeug über den Membranteil bzw. Betriebsbremsteil des kombinierten Federspeicher-/Membranbremszylinders eingebremst werden.

Die Feststellbremse wird somit herkömmlicherweise pneumatisch gelöst. Hierzu sind entsprechende pneumatische Leitungen von den Federspeicherbremszylindern zu elektropneumatischen Steuereinheiten und zumeist auch in das Fahrerhaus vorgesehen, wobei im Fahrerhaus über entsprechende pneumatische Ventile die Federspeicherteile der kombinierten Federspeicherbremszylinder be- bzw. entlüftet werden können. Bei einigen Systemen wird zwar die Steuerung der Feststellbremsfunktion vom Fahrerhaus aus elektrisch betätigt. Gleichwohl wird die Feststellbremse auch in diesen Fällen pneumatisch gelöst bzw. über eine Speicherfeder mechanisch eingelegt. Somit kann zwar eine Verrohrung des Fahrerhauses für die Betätigung der Feststellbremse reduziert werden. Gleichwohl verbleibt jedoch das Erfordernis einer pneumatischen Verrohrung zumindest von der elektropneumatischen Steuereinheit der Feststellbremseinrichtung zu den Federspeicherbremszylindern.

Ferner sind bei bekannten Bremsanlagen die Betriebsbremsfunktion und die Feststellbremsfunktion, konzeptionell sowie baulich weitestgehend voneinander getrennt, damit beide Funktionen unabhängig voneinander, insbesondere bei Ausfall einer der beiden Funktionen, zur Verfügung stehen. Zwar kann der Fahrer des Fahrzeugs mit einer derartigen Bremsanlage im Falle eines Ausfalls der Betriebsbremseinrichtung das Fahrzeug durch Betätigen der Feststellbremseinrichtung abbremsen. Dies ist jedoch aufgrund der vollständig anderen Funktionsweise der Feststellbremseinrichtung eine schwierige Aufgabe für den Fahrer, insbesondere während kritischer Fahrsituationen. Bspw. ist nämlich die Feststellbremseinrichtung regelmäßig nicht mit Antiblockiereinrichtungen ausgestattet, so dass bei einem Überbremsen des Fahrzeugs instabile Fahrzustände auftreten können. Dies wird insbesondere dadurch begünstigt, dass die Feststellbremseinrichtung vom Fahrer regelmäßig manuell betätigt wird. Das bei einer manuellen Bremse beim Fahrer entstehende Bremsgefühl unterscheidet sich jedoch substantiell von dem bei einer Fußbremsung entstehenden Bremsgefühl. Daher ist die Gefahr eines Über- oder Unterbremsen durch manuelles Betätigen der Feststellbremseinrichtung besonders groß. Die beiden unterschiedlichen Bremseinrichtungen der Feststellbremse und der Betriebsbremse sind daher bei herkömmlichen Bremsanlagen nur bedingt geeignet, im Fehlerfall die Funktion der jeweils anderen Bremseinrichtung zu übernehmen.

DE 199 16 434 A1 offenbart ein über einen Elektromotor mit daran angekoppeltem mechanischen Getriebe angetriebenes, schwenkbares Pedal zum Auslösen und Übertragen von Steuerbewegungen an Komponenten eines Kraftfahrzeugs, wobei die mechanische Verbindung zwischen dem Getriebe und dem Pedal so ausgebildet, dass Kraft über ein Stellglied nur in der Rückstellrichtung des Pedals ausgeübt wird. Ferner ist ein Energie speicherndes Rückstellelement vorgesehen, welches das Pedal ohne Einwirkung des Elektromotors aus einer ausgelenkten Lage in seine Ausgangslage zurückstellt und einen fortgesetzten Betrieb ermöglicht.

DE 60 2004 004 347 T2 offenbart ein Verfahren zum Betätigen einer Flugzeugbremse mit mindestens einem elektromechanischen Aktuator, umfassend einen Stößel, der gegenüber einem Scheibenstapel auf gesteuerte Weise derart verschiebbar ist, dass er auf den Scheibenstapel in Antwort auf einen Bremswert eine Kraft ausübt, dadurch gekenntzeichnet, dass das Verfahren die Schritte umfasst:
- wenn der Bremswert einen vorbestimmten Kontaktschwellwert überschreitet, Steuern des Aktuators derart, dass sich der Stößel dem Scheibenstapel nähert, bis der Stößel eine Kontaktposition mit dem Scheibenstapel erreicht,
- Speichern der besagten Kontaktposition,
- unmittelbar danach, Steuern des Aktuators derart, dass der Stößel in Antwort auf den Bremswert eine Kraft auf den Scheibenstapel ausübt.

Der Erfindung liegt daher das technische Problem zugrunde, die Funktionsweise von Bremsanlagen der eingangs genannten Art im Fehlerfall zu verbessern.

Die Erfindung löst dieses Problem mit einer Bremsanlage der eingangs genannten Art, bei der das Fahrzeug bei teilweisem oder verständigem Ausfall einer der beiden Bremseinrichtungen automatisch mittels der jeweils anderen Bremseinrichtung einbremsbar, insbesondere feststellbar, ist.

Eine erfindungsgemäße Fahrzeugbremsanlage umfasst eine Betriebsbremseinrichtung zur Bereitstellung einer Betriebsbremsfunktion zum Bremsen des Fahrzeugs während des Fahrbetriebs und eine Feststellbremseinrichtung zur Bereitstellung einer Feststellbremsfunktion zum Feststellen des Fahrzeugs unabhängig von der Betriebsbremseinrichtung. Im Fehlerfall übernimmt somit bspw. die Betriebsbremsfunktion automatisch die Feststellbremsfunktion und umgekehrt. Die Bremsanlage ist derart ausgestaltet, dass in einem derartigen Fall automatisch eine Umschaltung von der ausgefallenen Bremsfunktion auf die intakte Bremsfunktion umgeschaltet wird, d.h. bspw. dass die Feststellbremseinrichtung die Betriebsbremsfunktion bei Ausfall der Betriebsbremseinrichtungen übernimmt bzw. dass die Betriebsbremseinrichtung bei Ausfall der Feststellbremseinrichtung die Feststellbremsfunktion übernimmt. Diese Übernahme der jeweils anderen Funktion erfolgt automatisch. Der Fahrer kann daher bspw. weiterhin wie gewohnt das Fahrzeug mit dem Bremspedal einbremsen, wenn die Betriebsbremseinrichtung ausgefallen ist, obwohl das Einbremsen in diesem Fall mittels der Feststellbremseinrichtung erfolgt.

Aber auch bei einem Ausfall der Feststellbremseinrichtung kann der Fahrer das Fahrzeug feststellen und zwar mittels der der Erfindung zugrunde liegenden Betriebsbremseinrichtung. Da dies zwar regelmäßig keine dauerhafte Lösung zum Abstellen eines Fahrzeugs ist, muss der Fahrer weitere Maßnahmen zur dauerhaften Absicherung des Fahrzeugs ergreifen, bspw. durch Vorlegen von Keilen etc. Da in diesem Fall jedoch das Fahrzeug überhaupt zumindest vorläufig festgestellt werden kann, eröffnet sich für den Fahrer die Möglichkeit, das Fahrzeug verlassen zu können, um derartige Maßnahmen zu ergreifen.

Insgesamt ermöglicht die Erfindung, die Funktionsweise von Bremsanlagen im Fehlerfall effizient zu verbessern.

Eine besondere Ausführungsform der Erfindung zeichnet sich dadurch aus, dass die Feststellbremseinrichtung elektromechanisch oder elektropneumatisch betrieben ist und ein oder mehrere elektromechanische Stellorgane oder einen oder mehrere von einer elektropneumatischen Ventileinrichtung gesteuerte Federspeicherbremszylinder aufweist, mittels dem bzw. denen in Erwiderung auf ein elektrisches Steuersignal jeweils eine elektromotorische Kraft erzeugbar bzw. eine Federkraft freisetzbar und mittels dieser Kraft eine mechanische Bewegung zum Bremsen und/oder Feststellen eines angetriebenen Elements des Antriebssystems des Fahrzeugs, insbesondere eines Rades und/oder einer Antriebswelle, ausführbar ist und wobei zur Unterstützung der Betriebsbremsfunktion mittels der Feststellbremsfunktion eine Hilfsbremsfunktion bereitstellbar ist.

Unter dem Begriff "elektropneumatische Stellorgane" sind bspw. Elektromotoren, wie Servomotoren, zu verstehen. Unter dem Begriff "elektropneumatische Ventileinrichtung" ist bspw. ein Feststellbremsmodul zu verstehen.

Die Hilfsbremsfunktion wird vorteilhafterweise bei einem Versagen eines oder mehrerer Betriebsbremskreise aktiviert, so dass mittels der Feststellbremseinrichtung eine Redundanz für die Betriebsbremskreise geschaffen wird. Darüber hinaus kann die Hilfsbremsfunktion jedoch auch bei besonderen, kritischen Fahrsituationen zur Unterstützung intakter Betriebsbremskreise herangezogen werden. Durch die durch Heranziehung der Feststellbremseinrichtung zur Unterstützung der Betriebsbremskreise bereitgestellte Hilfsbremsfunktion erfolgt eine enge Verflechtung und Interaktion der unterschiedlichen Bremsfunktionen zugeordneten Bremsanlagenkomponenten. Hierdurch kann die Effizienz der Bremsanlage insgesamt erhöht werden.

Bei einer Variante ist die Feststellbremseinrichtung rein elektromechanisch, d.h. ohne pneumatische oder elektropneumatische Komponenten ausgebildet. Somit entfällt die Notwendigkeit einer Verrohrung zwischen den Stellorganen der Feststellbremseinrichtung und einer Steuereinheit zur Steuerung der Feststellbremseinrichtung. Ein pneumatischer Feststellbremskreis entfällt. Insgesamt vereinfacht sich somit der Aufbau sowie der Einbau einer Bremsanlage.

Das bzw. die elektromechanischen Stellorgane der Feststellbremseinrichtung können in vorteilhafter Weise mittels eines elektrischen Bremsanforderungssignals bzw. einem von dem elektrischen Bremsanforderungssignal abgeleiteten Signal angetrieben bzw. verstellt werden. Elektromechanische Stellorgane weisen nämlich kurze Reaktionszeiten auf, so dass auch Antiblockierfunktionen mittels elektromechanischer Stellorgane implementiert werden können. Sie eignen sich daher in vorteilhafter Weise für die Unterstützung der Betriebsbremsfunktion im Rahmen einer Hilfsbremsfunktion.

Bei einer bevorzugten Ausführungsform ist eine Bremspedaleinrichtung zum Betätigen des bzw. der Betriebsbremskreise rein elektromechanisch ausgeführt und dient zum Erzeugen wenigstens eines elektrischen Bremsanforderungssignals. Auf diese Weise kann auch eine pneumatische Verrohrung des Fahrerhauses vermieden werden, da bei dieser Ausführungsform ein pneumatischer Redundanzkreis zwischen der Bremspedaleinrichtung und einem elektropneumatischen Steuergerät der Bremsanlage entfallen kann. Hierdurch wird der Aufwand der Verrohrung, insbesondere des Fahrerhauses reduziert.

Bevorzugt ist das bzw. sind die elektromechanischen Stellorgane der Feststellbremseinrichtung durch Veränderung des elektrischen Steuersignals und damit der jeweils erzeugten elektromotorischen Kraft dosierbar verstellbar. Somit ist die Betätigung der Stellorgane ebenfalls dosierbar. Auf diese Weise kann auch die Bremswirkung der Stellorgane dosiert werden. In entsprechender Weise ist der bzw. sind die Federspeicherbremszylinder durch Veränderung des in diesem Fall der elektropneumatischen Ventileinrichtung zugeführten elektrischen Steuersignals und damit der den Federspeicherbremszylinder zu- oder abgeführten Drücke dosierbar verstellbar.

Vorteilhafterweise kann daher die Feststellbremseinrichtung im Falle eines Ausfalls eines, mehrerer oder aller Betriebsbremskreise eine Hilfsbremsfunktion derart bereitstellen, dass das Fahrzeug dosierbar abbremsbar ist. D.h., sofern ein Betriebsbremskreis ausfällt, übernimmt die Feststellbremseinrichtung das Einbremsen der von diesem Ausfall betroffenen Räder. Dies ist im Wesentlichen ohne eine Beeinträchtigung der Bremswirkung möglich, wenn die elektromechanischen Stellorgane bzw. Federspeicherbremszylinder entsprechend dimensioniert sind. Die Feststellbremseinrichtung stellt somit eine Hilfsbremsfunktion bereit, mittels der die Betriebsbremse dosierbar unterstützt bzw. ersetzt werden kann, falls dies bei einem Ausfall eines, mehrerer oder aller Betriebsbremskreise erforderlich werden sollte. Diese Hilfsbremsfunktion wird dabei vorteilhafterweise ohne einen pneumatischen Redundanzkreis am Bremswertgeber bereitgestellt.

Erfindungsgemäß ist das bzw. sind die elektromechanischen Stellorgane oder der oder die von der elektropneumatischen Ventileinrichtung gesteuerten Federspeicherbremszylinder an wenigstens eine autarke - separat von wenigstens einer Betriebsbremssteuereinheit des bzw. der Betriebsbremskreise vorgesehenen - Feststellbremssteuereinheit der Feststellbremseinrichtung angeschlossen und von dieser Feststellbremssteuereinheit steuerbar. Vorteilhafterweise weist dabei die Feststellbremseinrichtung eine eigenständige elektrische Energieversorgung zur elektrischen Versorgung der Feststellbremssteuereinheit und des bzw. der elektromechanischen Stellorgane auf, die unabhängig von einer elektrischen Energieversorgung der Betriebsbremssteuereinheit ist. Man erhält somit auf vorteilhafte Weise ein autarkes Teilsystem der Bremsanlage, nämlich ein autarkes Feststellbremssystem, mittels dem eine Hilfsbremsfunktion für die Betriebsbremse sichergestellt wird. Dabei ist die elektrische Versorgung der elektromechanischen Stellorgane bzw. der elektropneumatischen Ventileinrichtung der Feststellbremseinrichtung unabhängig von den Betriebsbremskreisen. Daher kann das Fahrzeug auch bei einem elektrischen und pneumatischen Ausfall der Betriebsbremskreise sicher über die mittels der Feststellbremseinrichtung bereitgestellte Hilfsbremsfunktion gebremst werden. Vorteilhafterweise sind die elektrische Energieversorgung der Feststellbremssteuereinheit und die elektrische Energieversorgung der Betriebsbremssteuereinheit jeweils als Batterie ausgebildet bzw. umfassen jeweils eine Batterie. Mittels dieser elektrischen Energieversorgungen bzw. Batterien werden somit jeweils voneinander unabhängige elektrische Versorgungskreise für die Feststellbremseinrichtung und für die Betriebsbremseinrichtung gebildet.

Vorteilhafterweise weist die Feststellbremseinrichtung jeweils wenigstens ein elektromechanisches Stellorgan oder jeweils einen Federspeicherbremszylinder an den Rädern wenigstens einer Hinterachse und wenigstens einer Vorderachse des Fahrzeugs, insbesondere jedoch an allen mit einem pneumatischen Bremszylinder des bzw. der Betriebsbremskreise bremsbaren Rädern, auf. Somit sind zumindest die wichtigsten Räder eines Fahrzeugs, ggf. alle Räder, die auch mittels des bzw. der Betriebsbremskreise eingebremst werden, im Falle eines Ausfalls eines Betriebsbremskreises über die Feststellbremseinrichtung mittels der Hilfsbremsfunktion einbremsbar.

Erfindungsgemäß sind die Feststellbremssteuereinheit und die Betriebsbrems-Steuereinheit(en) über eine Datenleitung, insbesondere einen CAN-Bus, zum Austausch von Daten zwischen der Feststellbremssteuereinheit und der bzw. den Betriebsbremssteuereinheiten verbunden. Auf diese Weise können die Steuerungen des Betriebsbremssystems und der Feststellbremse miteinander kommunizieren, um bspw. Ausfälle in einem der beiden Systeme zu erkennen und Maßnahmen zur Kompensation dieser Ausfälle zu ergreifen.

Erfindungsgemäß ist mittels der Feststellbremssteuereinheit die Funktionsfähigkeit des bzw. der Betriebsbremskreise überwachbar und ein etwaiger Ausfall des, eines bzw. aller Betriebsbremskreise feststellbar. Dabei ist die Feststellbremssteuereinheit derart ausgebildet, dass bei einem etwaigen derart festgestellten Ausfall die Räder des ausgefallenen Betriebsbremskreises mittels der diesen Rädern zugeordneten elektromechanischen Stellorgane, insbesondere in Abhängigkeit des Bremsanforderungssignals, einbremsbar sind. Bei einem Ausfall eines oder mehrerer Betriebsbremskreise übernimmt somit die Feststellbremseinrichtung das Einbremsen der von diesem Ausfall betroffenen Räder. Der Ausfall bleibt somit ohne nennenswerte Folgen für das Bremsverhalten des Fahrzeugs. Bei jedem Einzelfehler im Betriebsbremssystem ist somit eine Hilfsbremswirkung über das Feststellbremssystem weiterhin gegeben.

Erfindungsgemäß ist bzw. sind mittels der Betriebsbremssteuereinheiten die Funktionsfähigkeit der Feststellbremssteuereinheit und/oder der elektromechanischen Stellorgane bzw. der elektropneumatischen Ventileinrichtung und/oder der Federspeicherbremszylinder überwachbar und ein etwaiger Ausfall der Feststellbremssteuereinheit und/oder der elektromechanischen Stellorgane feststellbar. Dabei ist bzw. sind die Betriebsbremssteuereinheiten derart ausgebildet, dass bei einem etwaig derart festgestellten Ausfall die vom Ausfall betroffenen Räder mittels des bzw. der diesen Rädern zugeordneten Betriebsbremskreise einbremsbar sind. D.h. die Funktion der Feststellbremse kann somit mittels der Betriebsbremse zumindest vorübergehend gewährleistet werden. Zwar ist ein Feststellen eines Fahrzeuges mittels der Betriebsbremse keine dauerhaft sichere Maßnahme, da die Betriebsbremse einen Betriebsbremsdruck voraussetzt, der jedoch in der Regel mit der Zeit entweicht. Zudem verbieten gesetzliche Vorschriften in einigen Ländern eine Zuspannung der Bremsen im Rahmen der Feststellbremsfunktion mit flüssigen oder gasförmigen Medien, wie sie regelmäßig bei der Umsetzung der Betriebsbremsfunktion eingesetzt werden, da diese aufgrund einer Leckage entweichen könnten und somit die Gefahr eines Wegrollens des Fahrzeugs besteht. Zumindest kann aber das Fahrzeug auf diese Weise provisorisch abgestellt werden, ohne wegzurollen, um bspw. bei Ausfall der Feststellbremseinrichtung Hilfe zu rufen.

Bei dieser Ausführungsform wird auf vorteilhafte Weise die Verfügbarkeit der Feststellbremsfunktion, insbesondere bei Ausfall der Feststellbremsaktuatorik erhöht. Dies gilt sowohl bei elektropneumatischen Feststellbremsen als auch bei elektromechanischen Feststellbremsen. Insbesondere besteht bei bekannten Systemen der Nachteil, dass bei Ausfall der Aktuatorik der Feststellbremseinrichtung die Federspeicherbremszylinder nicht mehr entlüftet werden können. Somit kann die Feststellbremse nicht mehr eingelegt bzw. aktiviert werden. Gemäß der vorstehend beschriebenen bevorzugten Ausführungsform der Erfindung kann die Bremsanlage aber auch dann noch eine Feststellbremswirkung erzielen, wenn die Feststellbremseinrichtung teilweise oder vollständig, insbesondere deren Aktuatorik, ausgefallen ist. Bei einem Ausfall der Aktuatorik der Feststellbremseinrichtung ist bei Anforderung der Feststellbremsfunktion durch den Fahrer über eine Datenschnittstelle ein Verzögerungsanforderungssignal oder Bremsdrucksignal an die Betriebsbremssteuereinheit(en) sendbar. Diese Betriebsbremssteuereinheit(en) wählt daraufhin eine derartige Verzögerungsanforderung bzw. einen Bremsdruck für die Betriebsbremsfunktion, dass eine der störungsfreien Feststellbremsfunktion entsprechende Bremswirkung an den Rädern des Fahrzeugs erreicht werden kann.

Somit kann trotz eines Ausfalls der Aktuatorik der Feststellbremseinrichtung das Fahrzeug mit Hilfe der Betriebsbremseinrichtungen abgestellt werden, solange die Betriebsbremssteuereinheit(en) eingeschaltet ist bzw. sind. Während dieses Betriebszustandes kann dann das Fahrzeug durch geeignete weitere Maßnahmen am Wegrollen gehindert werden, bspw. durch Einlegen von Federspeicherbremsen am Anhänger oder durch Vorlegen von Keilen vor bzw. hinter die Räder des Fahrzeugs.

Vorteilhafterweise wird eine Beeinträchtigung der Funktionsfähigkeit der Feststellbremseinrichtung im Fahrerhaus des Fahrzeugs, insbesondere auf akustische und/oder optische Weise, signalisiert.

Bei einer weiteren bevorzugten Ausführungsform ist bzw. sind die Betriebsbremssteuereinheit(en) derart gesteuert, dass auch nach einer Abschaltung einer Zündung des Fahrzeugs die Funktionsfähigkeit des bzw. der Betriebsbremskreise für eine vorbestimmte Zeitdauer aufrechterhalten bleibt. D.h. die Betriebsbremseinrichtung hält auch dann noch die Feststellbremsfunktion für eine mit der vorbestimmten Zeitdauer korrespondierende Nachlaufzeit aufrecht, wenn die Zündung des Fahrzeugs abgeschaltet ist. Dazu wird der Betriebsbremsdruck in den Bremszylindern aufrechterhalten. Der Fahrer muss daher nicht den Motor des Fahrzeugs laufen lassen, um Sicherungsmaßnahmen zum Feststellen des Fahrzeugs zu ergreifen. Vielmehr bleibt das Fahrzeug - zumindest für die vorbestimmte Zeitdauer - im festgestellten Zustand, so dass keine Gefahr eines Wegrollens des Fahrzeugs besteht. Auf diese Weise wird mittels der Betriebsbremseinrichtung für die vorbestimmte Zeitdauer eine Hilfsfeststellbremsfunktion bereitgestellt. Vorteilhafterweise ist während dieser Zeitdauer die elektrische Energieversorgung der Betriebsbremssteuereinheit(en) mit der/den Betriebsbremssteuereinheit(en) elektrisch verbunden bzw. ist/sind die Betriebsbremssteuereinheit(en) direkt mit einer Fahrzeugbatterie verbunden. Dies ist eine besonders effektive Lösung zur Aufrechterhaltung der Funktionsfähigkeit der Betriebsbremskreise auch bei abgeschalteter Fahrzeugzündung.

Nach Beendigung der Hilfsfeststellbremsfunktion kann die Betriebsbremssteuereinheit vorteilhafterweise in einen Energiesparmodus versetzt werden, in dem funktionale Gruppen in der Betriebsbremssteuereinheit werden deaktiviert werden.

Bei einer weiteren bevorzugten Ausführungsform wird vor Ablauf der vorbestimmten Zeitdauer - während der die Funktionsfähigkeit des bzw. der Betriebsbremskreise aufrechterhalten bleibt - ein optisches und/oder akustisches, insbesondere vom Ablauf dieser Zeitdauer abhängiges, insbesondere zwei- oder mehrstufiges, Warnsignal ausgegeben, bspw. durch ein automatisches, insbesondere getaktetes, Betätigen einer Hupe oder durch automatisches Einschalten des Warnblinklichts bzw. Einschalten bzw. getaktetes Einschalten der Fahrzeugbeleuchtung. Die Taktzeit bzw. Zykluszeit verkürzt sich vorteilhafterweise kurz vor Beendigung der Hilfsfeststellbremsfunktion. Auf diese Weise wird der Fahrer gewarnt, dass nur noch für kurze Zeit das Fahrzeug am Wegrollen gehindert ist, d.h. die Betriebsbremseinrichtung das Fahrzeug nur noch für kurze Zeit halten wird. Sofern der Fahrer bis zur Ausgabe des Warnsignals das Fahrzeug noch nicht durch geeignete Maßnahmen dauerhaft hat feststellen können, erhält er aufgrund des Warnsignals die Gelegenheit, das Fahrerhaus zu besetzen und die Betriebsbremse erneut zu betätigen oder einen besseren Abstellplatz aufzusuchen.

Bei einer weiteren bevorzugten Ausführungsform sind die elektromechanischen Stellorgane der Räder einer ersten Achse, insbesondere der Hinterachse, an eine erste Betriebsbremssteuereinheit eines ersten Betriebsbremskreises angeschlossen und von dieser Steuereinheit steuerbar und die elektromechanischen Stellorgane der Räder einer zweiten Achse, insbesondere der Vorderachse, an eine zweite Betriebsbremssteuereinheit eines zweiten Betriebsbremskreises angeschlossen und von dieser Steuereinheit steuerbar. Die elektromechanischen Stellorgane werden somit jeweils von den Betriebsbremssteuereinheiten versorgt bzw. gesteuert.

Vorteilhafterweise erfolgt dabei die Versorgung bzw. Steuerung der jeweiligen Stellorgane achsweise über Kreuz. D.h. der erste Betriebsbremskreis ist ein Bremskreis zum Bremsen der Räder der Vorderachse(n) und die erste Betriebsbremssteuereinheit ist zur Steuerung der Bremsen der Vorderachse(n) vorgesehen, während der zweite Betriebsbremskreis ein Bremskreis zum Bremsen der Räder der Hinterachse(n) und die zweite Betriebsbremssteuereinheit zur Steuerung der Bremsen der Hinterachse(n) vorgesehen ist. Dabei werden die Stellorgane der Räder der Vorderachse(n) von der zweiten Betriebsbremssteuereinheit (zur Steuerung der Bremsen der Hinterachse(n)) versorgt und gesteuert, während die Stellorgane der Räder der Hinterachse(n) von der ersten Betriebsbremssteuereinheit (zur Steuerung der Bremsen der Vorderachse(n)) versorgt und gesteuert werden. Die genannten Stellorgane übernehmen üblicherweise die Feststell- bzw. Hilfsbremsfunktion an den Rädern.

Durch diese Überkreuz-Ansteuerung der Stellorgane, d.h. der Ansteuerung der Stellorgane der Hinterachse mittels der für die Vorderachse vorgesehenen Betriebsbremssteuereinheit und umgekehrt kann auch bei Ausfall bspw. eines pneumatischen Betriebsbremskreises, auch der Steuereinheit, immer noch ein Hilfsbremsen mit allen Rädern, insbesondere den Rädern des ausgefallenen Betriebsbremskreises erfolgen. Darüber hinaus kann auch die Funktion der Feststellbremse noch gewährleistet werden, selbst wenn ein Bremskreis ausfällt.

Weitere vorteilhafte Ausführungsformen ergeben sich aus den Unteransprüchen sowie aus den anhand der Zeichnung näher erläuterten Ausführungsbeispielen. In der Zeichnung zeigt:
- Fig. 1: eine schematische Darstellung einer Bremsanlage gemäß einem ersten Ausführungsbeispiel der Erfindung;
- Fig. 2: eine schematische Darstellung einer Bremsanlage gemäß einem zweiten Ausführungsbeispiel der Erfindung;
- Fig. 3: ein Blockschaltbild gemäß einem dritten Ausführungsbeispiel der Erfindung;
- Fig. 4: eine schematische Darstellung einer weiteren Bremsanlage;
- Fig. 5: eine schematische Darstellung einer weiteren Bremsanlage und
- Fig. 6: eine schematische Darstellung einer weiteren Bremsanlage.

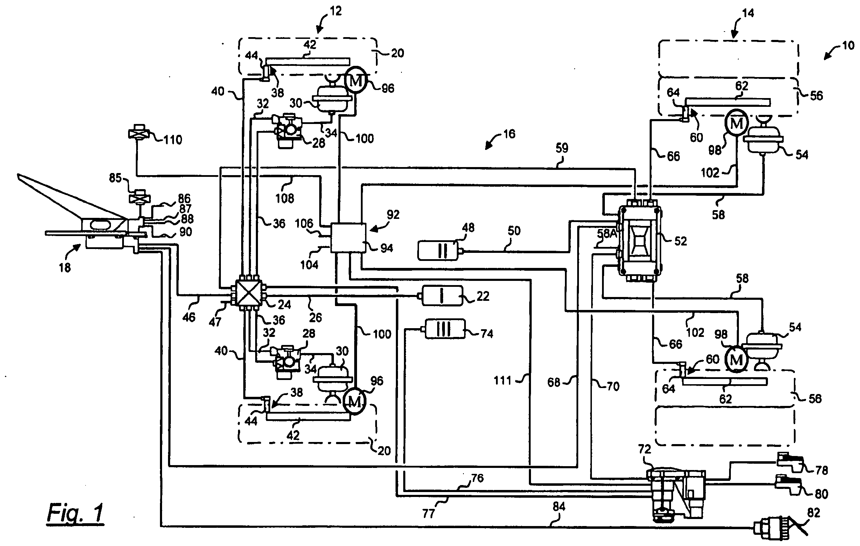

Fig. 1 zeigt schematisch ein zweiachsiges Fahrzeug 10 mit einer Vorderachse 12 und einer Hinterachse 14 sowie einer Bremsanlage 16 mit drei Bremskreisen einer mittels einer Bremspedaleinrichtung 18 betätigbaren Betriebsbremse. Die Erfindung ist jedoch nicht auf zweiachsige Fahrzeuge beschränkt und kann insbesondere auch bei Fahrzeugen mit mehr als zwei Achsen, insbesondere mehreren Hinterachsen und/oder mehreren Vorderachsen eingesetzt werden. Unter einem Fahrzeug ist dabei u.a. auch ein Zugfahrzeug oder auch ein Fahrzeug ohne Zugfunktion, z.B. ein Bus, zu verstehen.

Ein erster Betriebsbremskreis dient zum Bremsen der Räder 20 der Vorderachse 12. Dieser erste Betriebsbremskreis weist einen Druckluftvorratsbehälter 22 auf, der mit einem Vorderachsbremssteuermodul 24 über eine Druckluftleitung 26 verbunden ist. Ferner umfasst der erste Betriebsbremskreis für jedes der Räder 20 jeweils eine Ventileinheit 28, über die Druckluft zu Bremszylindern 30 von Bremsen an den Rädern 20 zu- bzw. abgeführt werden kann. Die Ventileinheiten 28 stehen daher über Druckluftleitungen 32 mit dem Vorderachsbremssteuermodul 24 und über Druckluftleitungen 34 mit den Bremszylindern 30 in Verbindung.

Die Ventileinheiten 28 sind ferner über elektrische Leitungen 36 mit dem Vorderachsbremssteuermodul 24 verbunden, um von diesem Steuersignale zum Betätigen der Ventileinhalten 28 zu erhalten. Vorteilhafterweise können die beiden Ventileinheiten 28 auch in das Vorderachsbremssteuermodul 24 integriert werden.

An den Rädern 20 sind ferner Radgeschwindigkeitssensiermittel 38 vorgesehen, welche über elektrische Leitungen 40 mit dem Vorderachsbremssteuermodul 24 verbunden sind. Die Radgeschwindigkeitssensiermittel 38 dienen zur Ermittlung der jeweiligen Raddrehgeschwindigkeit. Sie bestehen jeweils aus einem mit dem jeweiligen Rad 20 drehfest verbundenen Polrad 42, welches mit einem aktiv oder passiv arbeitenden Rad-Sensor 44 elektromagnetisch gekoppelt sind. Mittels der Radgeschwindigkeitssensiermittel 38 kann bspw. ein Blockieren oder ein Schlupf der Räder 20 festgestellt und über entsprechende Steuersignal vom Bremssteuermodul 24 an die Ventileinheiten 28 der Bremsdruck zu den Bremszylindern 30 nachgeregelt, insbesondere bei einer Blockierneigung eines Rades 20 reduziert werden. Auf diese Weise wird eine Antiblockierfunktion für die Räder 20 bereitgestellt.

Das Vorderachsbremssteuermodul 24 ist ferner über eine elektrische Leitung 46 mit der Bremspedaleinrichtung 18 verbunden. Diese Leitung 46 übermittelt ein elektrisches Bremsanforderungssignal von der Bremspedaleinrichtung 18 an das Vorderachsbremssteuermodul 24. Schließlich weist das Vorderachsbremssteuermodul 24 einen Anschluss 47 für eine elektrische Energieversorgung auf.

Ein zweiter Bremskreis weist einen zweiten Druckluftvorratsbehälter 48 auf, der über eine Druckluftleitung 50 mit einem Hinterachsbremssteuermodul 52 pneumatisch verbunden ist. Dieser zweite Bremskreis umfasst ferner Bremszylinder 54, wobei jeder der Bremszylinder jeweils einem Rad 56 der Hinterachse 14 zugeordnet ist. Die Bremszylinder 54 sind über Druckluftleitungen 58 mit dem Hinterachsbremssteuermodul 52 verbunden. Innerhalb des Hinterachsbremssteuermoduls 52 sind ein bzw. mehrere Ventile zur Bremsdruckzumessung für die Bremszylinder 54 vorgesehen.

Das Hinterachsbremssteuermodul 52 weist einen Anschluss 58A für eine elektrische Energieversorgung auf. Das Hinterachssteuermodul 52 ist ferner über eine Datenleitung 59 mit dem Vorderachsbremssteuermodul 24 verbunden. Über diese Datenleitung 59 findet eine Kommunikation zwischen beiden Steuermodulen statt. Die Steuermodule 24, 52 sind derart ausgebildet, dass sie etwaige Fehlfunktionen des jeweils anderen Steuermoduls erfassen können.

An den Rädern 56 der Hinterachse 14 sind ebenfalls Radgeschwindigkeitsensiermittel 60 vorgesehen, welche eine Ermittelung der jeweiligen Raddrehgeschwindigkeit erlauben. Wiederum bestehen die Radgeschwindigkeitssensiermittel 60 jeweils aus einem mit dem Rad 56 drehfest verbundenen Polrad 62, das mit einem aktiv oder passiv (induktiv) arbeitenden Radsensor 64 elektromagnetisch gekoppelt ist. Die Radgeschwindigkeitssensiermittel 60, insbesondere die Radsensoren 64, sind über elektrische Leitungen 66 mit dem HinterachsBremssteuermodul 52 verbunden. Mittels der Radgeschwindigkeitssensiermittel 60 kann ein Blockieren bzw. ein Schlupf der Räder 56 der Hinterachse 14 festgestellt und entsprechend die Bremsdruckzumessung zu den Bremszylindern 64 variiert werden, um einer Blockierneigung der Räder 56 bzw. einem Schlupf dieser Räder 56 entgegenzuwirken.

Das Hinterachsbremssteuermodul 52 ist ferner über eine elektrische Leitung 68 mit der Bremspedaleinrichtung 18 verbunden und empfängt über diese elektrische Leitung 68 ein elektrisches Bremsanforderungssignal von der Bremspedaleinrichtung 18. Unter Berücksichtigung des elektrischen Bremsanforderungssignals bemisst das Hinterachsbremssteuermodul 52 - ebenso wie das Vorderachsbremssteuermodul 24 - den den Bremszylindern 54 bzw. 30 zuzuführenden Bremsdruck.

Das Hinterachsbremssteuermodul 52 ist ferner mit einer elektrischen Leitung 70 mit einem Anhängersteuerventil 72 eines dritten Bremskreises verbunden. Dieser dritte Bremskreis weist einen dritten Druckluftvorratsbehälter 74 auf, der über eine Druckluftleitung 76 mit dem Anhängersteuerventil 72 verbunden ist. Das Anhängersteuerventil 72 dient zur Bremsdrucksteuerung eines ankoppelbaren Anhängefahrzeugs (nicht dargestellt). Das Anhängersteuerventil 72 gibt die von dem Druckluftvorratsbehälter 74 bezogene Druckluft nach Maßgabe elektrischer Steuersignale, insbesondere der über die elektrische Leitung 70 vom Hinterachsbremssteuermodul 52 oder über eine elektrische Leitung 77 vom Vorderachsbremssteuermodul 24 erhaltenen elektrischen Steuersignale, über Druckluftanschlüsse 78, 80 an eine Bremsanlage eines ankoppelbaren Anhängerfahrzeuges ab. Indirekt erhält somit das Anhängersteuerventil 72 über das Hinterachsbremssteuermodul 52 oder das Vorderachsbremssteuermodul 24 ein elektrisches Signal, z.B. ein pulsbreitenmoduliertes Signal, das den Bremswunsch des Fahrers repräsentiert.

Ferner ist ein elektrischer Steckanschluss 82 zur Stromversorgung und Übermittelung von Daten zum und vom Anhängerfahrzeug vorgesehen. Der elektrische Steckanschluss 82 ist über eine elektrische Leitung 84 mit der Bremspedaleinrichtung 18 verbunden.

Die Bremspedaleinrichtung 18 ist ferner mit einem Rollbremssignalgeber 85 verbunden, über den eine Rollbremsfunktion aktiviert bzw. deaktiviert werden kann. Diese Rollbremsfunktion ist bspw. derart ausgestaltet, dass nach Aktivierung der Rollbremsfunktion bei fahrendem Fahrzeug eine Überwachung darauf stattfindet, ob das Fahrzeug zum Stillstand kommt. Bei Erkennen des Fahrzeugstillstandes infolge einer Bremsbetätigung durch den Fahrer werden dann automatisch durch Betätigung der Ventileinheiten 28 sowie der in dem Hinterachsbremssteuermodul 52 vorgesehenen Ventile die jeweils vorliegenden oder vorbestimmten Bremsdrücke in den Bremszylindern 30, 54 sowie in der Anhängerbremsanlage auf dem aktuell vorliegenden bzw. einem vorbestimmten Niveau gehalten, ohne dass der Fahrer weiterhin das Bremspedal betätigen muss. Hierdurch kann das Fahrzeug auch nach dem Lösen des Bremspedals an einer geneigten Fahrbahn im Stillstand gehalten werden. Sobald erkannt wird, dass der Fahrer versucht, mit dem Fahrzeug anzufahren, werden die Radbremsen sowie die Anhängerbremsanlage automatisch gelöst.

Weder das Anhängersteuerventil 72, noch das Hinterachsbremssteuermodul 52, noch das Vorderachsbremssteuermodul 24 weisen pneumatische Steuereingänge auf. Vielmehr werden die von diesen drei Komponenten zur Verfügung gestellten Drücke anhand von elektrischen Signalen bemessen. Alle drei Bremskreise sind daher elektrisch gesteuerte Bremskreise, die lediglich über elektrische Leitungen mit der Bremspedaleinrichtung 18 verbunden sind. Insbesondere stellt die Bremspedaleinrichtung 18 weder dem Vorderachsbremssteuermodul 24 noch dem Hinterachsbremssteuermodul 52 noch dem Anhängersteuerventil 72 einen Redundanzdruck zur Verfügung, der im Falle eines Ausfalls elektrischer Komponenten für eine Bremsdruckzumessung für Bremszylinder einer Achse herangezogen werden könnte.

Das Bremssystem ist somit als rein elektronisch gesteuertes Bremssystem aufgebaut. Daher weist die Bremspedaleinrichtung 18 keinerlei pneumatische Komponenten auf. Insbesondere weist die Bremspedaleinrichtung 18 keine Anschlüsse für Druckluftleitungen auf.

Die Bremspedaleinrichtung 18, das Vorderachsbremssteuermodul 24 sowie das Hinterachsbremssteuermodul 52 sind direkt oder indirekt mit einer oder mehreren elektrischen Energieversorgung(en) (nicht dargestellt) verbunden. Vorteilhafterweise ist die Bremspedaleinrichtung 18 über einen Anschluss 86 mit einer ersten elektrischen Energieversorgung eines ersten, auch das Vorderachsbremssteuermodul 24 über dessen Anschluss 47 sowie das Hinterachsbremssteuermodul 52 über dessen Anschluss 58A versorgenden Stromkreises verbunden. Die Bremspedaleinrichtung 18 ist vorteilhafterweise ferner über einen Anschluss 87 mit einer zweiten elektrischen Energieversorgung eines zweiten, auch die Feststellbremssteuereinheit 94 versorgenden Stromkreis verbunden. Die Bremspedaleinrichtung 18 ist somit vorteilhafterweise mit beiden Stromkreisen verbunden. Die Bremspedaleinrichtung 18 weist somit vorteilhafterweise eine mindestens zweifache Energieversorgung auf, um auch im einfachen Fehlerfall noch die Funktion der Bremspedaleinrichtung 18 sicherzustellen.

Die Bremspedaleinrichtung 18 weist ferner einen Anschluss 88 für einen Datenbus, insbesondere für einen CAN-Bus auf. Vorteilhafterweise sind jedoch statt nur eines Anschlusses 88 aus Redundanzgründen mindestens zwei Datenverbindungen zum Bremssystem vorgesehen.

Ebenfalls aus Redundanzgründen weist die Bremspedaleinrichtung 18 vorteilhafterweise mindestens zwei Sensoren zur Erfassung des als elektrisches Bremsanforderungssignal ausgegebenen Sollwertes der Bremsanforderung, z.B. der Verzögerungsanforderung, auf.

Ferner weist die Bremspedaleinrichtung 18 einen Diagnoseanschluss 90 auf, der eine Schnittstelle bildet, insbesondere für den Anschluss eines Wartungsrechners zur Wartung und Fehleranalyse.

Vorteilhafterweise kann die Bremspedaleinrichtung 18 eines, mehrere oder alle der genannten und folgenden Merkmale aufweisen: Die Bremspedaleinrichtung 18 weist eine Steuerungseinrichtung sowie einen oder mehrere Anschlüsse zur Ansteuerung von Bremslichtern des Fahrzeuges auf. Ferner weist die Bremspedaleinrichtung 18 Mittel, insbesondere Sensoren, bzw. Anschlüsse für derartige Mittel zum Auslesen von ggf. nur optional vorhandenen Bedienelementen des Bremssystems im Fahrerhaus des Fahrzeuges, insbesondere in seinem Cockpit, auf. Ferner weist die Bremspedaleinrichtung 18 Anschlüsse zur Ansteuerung optischer und/oder akustischer Signale des Bremssystems im Fahrerhaus, insbesondere im Cockpit, oder außerhalb des Fahrzeuges auf.

Ferner weist die Bremspedaleinrichtung 18 vorteilhafterweise wenigstens einen Anschluss für eine elektrische Verbindung zur Steuerung der Antriebseinheit des Fahrzeuges zur Einleitung einer unterstützenden Motorbremse auf. D.h. mittels der Bremspedaleinrichtung 18 kann ein Signal erzeugt werden, das eine unterstützende Motorbremse einleitet bzw. steuert.

Die Bremspedaleinrichtung 18 weist ferner vorteilhafterweise einen Anschluss für eine elektrische Verbindung zu einem Retarder zur Erzeugung einer Bremswirkung mittels des Retarders auf. D.h. die Bremspedaleinrichtung 18 kann ein elektrisches Signal zur Steuerung der Retarderbremse erzeugen.

Ferner weist die Bremspedaleinrichtung 18 vorteilhafterweise wenigstens einen Anschluss für eine elektrische Verbindung zu elektromotorischen Komponenten im Antriebsstrang des Fahrzeuges auf, wie bspw. zu einer Starter-Generatoreinheit, einer Hybrid-Einheit oder ähnliches, mittels der bzw. denen eine weitere unterstützende Bremswirkung erzielbar ist. D.h. die Bremspedaleinrichtung 18 erzeugt wenigstens ein elektrisches Signal zur Ansteuerung derartiger elektromotorischer Komponenten zur Erzeugung weiterer Bremswirkungen.

In einer nicht dargestellten Ausführung ist die Steuerungselektronik bzw. Steuerungslogik des Vorderachsbremssteuermoduls und/oder des Hinterachsbremssteuermoduls in die Bremspedaleinrichtung integriert, so dass die entsprechende Elektronik bzw. Logik in dem jeweiligen Modul entfällt. Die elektropneumatischen Ventile des Vorderachsbremssteuermoduls bzw. des Hinterachsbremssteuermoduls sind in diesem Fall von der Bremspedaleinrichtung ansteuerbar.

Insgesamt bildet die Bremspedaleinrichtung somit eine Schnittstelle zwischen dem Fahrer, dem Bremssystem und dem restlichen Fahrzeug.

Die Bremsanlage 16 umfasst ferner eine Feststellbremseinrichtung 92, die als autarkes Teilsystem ausgebildet ist. Die Feststellbremseinrichtung 92 weist eine Feststellbremssteuereinheit 94 auf, die an den Rädern 20, 56 vorgesehene elektromechanische Stellorgane 96, 98, insbesondere Elektromotoren, oder pneumatische Federspeicher, betätigen kann. Die Stellorgane 96 sind an den Rädern 20 der Vorderachse 12 und die Stellorgane 98 an den Rädern 56 der Hinterachse 14 vorgesehen. Die Stellorgane 96 sind über elektrische Leitungen 100 mit der Feststellbremssteuereinheit 94 verbunden. Die Stellorgane 98 sind über elektrische Leitungen 102 mit der Feststellbremssteuereinheit 94 verbunden.

Ferner weist die Feststellbremssteuereinheit 94 einen Anschluss 104 für einen Datenbus, insbesondere CAN-Bus auf. Der Anschluss 104 ist über den Datenbus mit dem korrespondierenden Anschluss 88 der Bremspedaleinrichtung 18 verbunden.

Ferner weist die Feststellbremssteuereinheit 94 einen Anschluss 106 für eine (nicht dargestellte) elektrische Energieversorgung auf. Diese elektrische Energieversorgung ist unabhängig von der elektrischen Energieversorgung der Betriebsbremskreise, insbesondere unabhängig von der über den Anschluss mit der Bremspedaleinrichtung 18 verbundene elektrischen Energieversorgung.

Die Feststellbremssteuereinheit 94 ist ferner über eine elektrische Leitung 108 mit einer elektrischen Betätigungseinrichtung 110 zur Betätigung der Feststellbremse verbunden. Schließlich ist die Feststellbremssteuereinheit 94 über eine elektrische Leitung 111 mit dem Anhängersteuerventil 72 verbunden, so dass über ein Steuersignal die (Feststell-)Bremse im Anhängerfahrzeug eingelegt werden kann.

Die rein elektrisch gesteuerte Bremsanlage 16 weist somit ein autarkes Brems-Teilsystem, nämlich die von den Betriebsbremskreisen unabhängig betreibbare Feststellbremseinrichtung 92 auf. Bei einem Ausfall einer oder mehrerer der Betriebsbremskreise oder auch bei einem Ausfall der gesamten Betriebsbremse kann das Fahrzeug 10 immer noch an den mittels der Feststellbremse einbremsbaren, vorzugsweise allen Rädern über die Feststellbremseinrichtung 92 sicher gebremst werden. Die Feststellbremseinrichtung 92 stellt somit eine Hilfsbremsfunktion für die Betriebsbremse dar. Über den Datenbus, welcher eine Verbindung zwischen der Bremspedaleinrichtung 18 und der Feststellbremssteuereinheit 94 schafft, können Daten ausgetauscht werden, um den Ausfall eines oder mehrerer Betriebsbremskreise feststellen zu können. Sofern von der Feststellbremssteuereinheit 94 jedoch keinerlei Daten mehr über den Datenbus empfangen werden, wird dies als Ausfall der Betriebsbremse erkannt und das Fahrzeug automatisch eingebremst bzw. ein Alarmsignal ausgegeben, damit der Fahrer das Fahrzeug über die elektrische Betätigungseinrichtung 110 oder über die Bremspedaleinrichtung 18 einbremsen kann.

Wenn bei Ausfall eines oder aller Betriebsbremskreise eine Kommunikation über den Datenbus von der Bremspedaleinrichtung 18 zur Feststellbremssteuereinheit 94 noch möglich ist, wird vorteilhafterweise die Hilfsbremswirkung von der Bremspedaleinrichtung 18 über die Feststellbremssteuereinheit 94 bereitgestellt.

Die elektromechanischen Stellorgane 96, 98 an jedem der Räder 20, 56 werden über elektrische Steuersignale angesteuert, so dass die Stellorgane 96, 98 eine dem jeweiligen Steuersignal entsprechende elektromotorische Kraft erzeugen und mittels dieser Kraft eine mechanische Bewegung zum Bremsen und/oder Feststellen des Rades 20 bzw. 56 ausführen kann. Diese elektromechanischen Stellorgane sind vorteilhafterweise derart beschaffen, dass bei Unterbrechung der elektrischen Steuersignale das Stellorgan in seiner zuletzt eingenommenen Position verharrt. Somit bleibt eine mittels dieser Stellorgane eingelegte Bremse auch dann noch eingelegt, wenn die elektrische Signal- bzw. Energiezufuhr zum Stellorgan 96, 98 unterbrochen ist. Das Fahrzeug 10 kann somit mittels der elektrischen Stellorgane 96, 98 sicher und dauerhaft festgestellt werden. Die Stellorgane 96, 98 bilden daher eine Feststellbremse bzw. eine sog. Parkbremse. Aufgrund ihrer elektrischen Steuerbarkeit können sie jedoch auch abgestuft, d.h. dosierbar verstellt werden. Daher eignen sie sich auch in idealer Weise zur Unterstützung bzw. zur Übernahme von Funktionen der Betriebsbremse, insbesondere als Hilfsbremse für die Betriebsbremse.

Ein rein elektrisch bzw. elektronisch betätigtes Betriebsbremssystem wird auf diese Weise mit einem elektromechanischen Feststellbremskreis, d.h. der Feststellbremseinrichtung 92, ergänzt. Diese Feststellbremseinrichtung 92 sichert bei Ausfall der pneumatischen Betriebsbremse eine ausreichende Hilfsbremskraft. Bei Ausfall eines, mehrerer oder aller Betriebsbremskreise kann mit Hilfe dieser autarken Feststellbremseinrichtung 92 an den betreffenden Achsen ein ausreichendes Hilfsbremsen gewährleistet werden. Ferner kann somit an allen mit diesen Stellorganen 96, 98 ausgerüsteten Achsen eine Feststellbremse eingelegt werden.

Vorstehend wurde die Rollbremsfunktion mittels der Bremszylinder 30, 54 der Betriebsbremskreise erläutert. Die Rollbremsfunktion ist jedoch bei einem weiteren Ausführungsbeispiel zusätzlich oder alternativ mittels der elektromechanischen Stellorgane 96, 98 implementiert. Wird der Rollbremssignalgeber 85 betätigt, so dass die Rollbremsfunktion aktiviert wird, erfolgt bei fahrendem Fahrzeug eine Überwachung dahingehend, ob das Fahrzeug zum Stillstand gekommen ist. Hierzu werden die Radgeschwindigkeitssensiermittel 38, 60 herangezogen. Bei Erkennen des Fahrzeugstillstandes infolge einer Bremsbetätigung durch den Fahrer werden dann automatisch die elektromechanischen Stellorgane 96, 98 betätigt, so dass die entsprechenden zugeordneten Radbremsen zugespannt werden. Wiederum muss nunmehr der Fahrer nicht permanent das Bremspedal betätigen. Vielmehr kann das Fahrzeug auch nach Lösen des Bremspedals an einer geneigten Fahrbahn im Stillstand gehalten werden. Sobald die Bremsanlage jedoch erkennt, dass der Fahrer versucht mit dem Fahrzeug anzufahren, werden die Radbremsen, insbesondere die elektromechanischen Stellorgane, sowie ggf. die Anhängerbremsanlage automatisch gelöst. Die Verwendung der elektromechanischen Stellorgane hat den Vorteil, dass selbst bei Ausfall der elektrischen Energieversorgung während aktivierter Rollbremsfunktion bei Fahrzeugstillstand und gelöstem Bremspedal das Fahrzeug auch bei geneigter Fahrbahn nicht wegrollen kann, da auch bei Stromausfall die elektromechanischen Stellorgane die Radbremsen eingelegt halten. Eine Überwachung des Fahrers dahingehend, ob er bspw. den Fahrersitz verlässt, kann bei diesem Ausführungsbeispiel entfallen. Eine Fahrerüberwachung wird herkömmlicherweise nämlich deshalb eingesetzt, um zu vermeiden, dass bei Ausfall der elektrischen Energieversorgung während einer derartigen Phase der aktivierten Rollbremsfunktion während des Fahrzeugstillstandes der Fahrer seinen Fahrersitz verlässt, da er im Glauben ist, das Fahrzeug sei sicher festgestellt. Wenn dann jedoch der Strom ausfällt, würde bei herkömmlichen Rollbremsen die mittels der aktivierten Rollbremsfunktion eingelegte Betriebsbremse gelöst und das Fahrzeug könnte wegrollen.

Bei einem weiteren Ausführungsbeispiel ist jedoch wie oben zunächst erläutert die Rollbremsfunktion mittels der Betriebsbremskreise implementiert. D.h. bei Fahrzeugstillstand und aktivierter Rollbremsfunktion werden die jeweils vorliegenden Bremsdrücke bzw. vorbestimmte Bremsdrücke in den Bremszylindern 30, 54 sowie in der Anhängerbremsanlage auf dem aktuell vorliegenden bzw. einem vorbestimmten Niveau gehalten. Bei diesem besonderen Ausführungsbeispiel überwacht dann die Feststellbremseinrichtung 92 bzw. die Feststellbremssteuereinheit 94 die Betriebsbremskreise bzw. Betriebsbremsfunktion der Bremsanlage. Sofern dabei ein Ausfall von Betriebsbremskreisen bzw. der Betriebsbremsfunktion erkannt wird, übernimmt die Feststellbremseinrichtung 92 bzw. die Feststellbremssteuereinheit 94 die Rollbremsfunktion, indem die elektromechanischen Stellorgane 96, 98 betätigt werden, um die jeweiligen Radbremsen einzulegen. Diese Betätigung der elektromechanischen Stellorgane 96, 98 erfolgt jedoch nur dann, wenn die Fahrzeuggeschwindigkeit null ist, d.h. das Fahrzeug steht. Dieser Stillstand wird mittels der Radgeschwindigkeitssensiermittel 38, 60 detektiert.

Die Radgeschwindigkeitssensiermittel 38, 60 werden darüber hinaus dazu verwendet, um zu erkennen, ob das Fahrzeug bei aktivierter Rollbremse und zunächst erreichtem Fahrzeugstillstand zu rollen beginnt. Falls dies der Fall sein sollte, wird die Bremskraft erhöht, indem die elektromechanischen Stellorgane 96, 98 und/oder die Bremszylinder 30, 54 größere Zuspannkräfte für die Radbremsen zur Verfügung stellen.

In dem in Fig. 1 gezeigten Ausführungsbeispiel ist die Betriebsbremseinrichtung elektropneumatisch ausgebildet, d.h. die Radbremsen werden bei Betätigung der Bremspedaleinrichtung 18 pneumatisch zugespannt, wobei der jeweilige pneumatische Betriebsbremsdruck elektrisch gesteuert wird. Demgegenüber ist die Feststellbremseinrichtung elektromechanisch ausgebildet, d.h. die Radbremsen werden bei Betätigung der elektrischen Betätigungseinrichtung 110 mittels elektromechanischer Stellorgane mechanisch zugespannt, wobei die jeweilige mechanische Bremskraft elektrisch gesteuert wird. Es wird daher von einer elektropneumatischen Betriebsbremse und einer elektromechanischen Feststellbremse gesprochen.

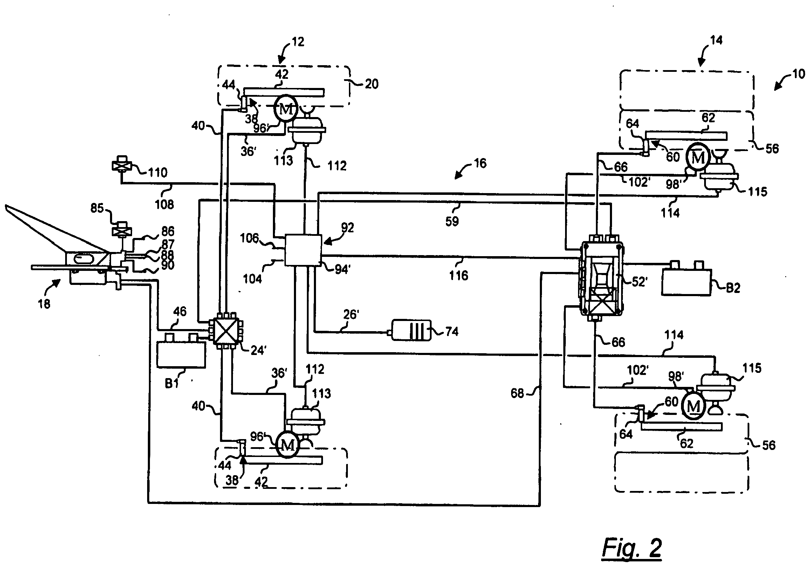

Fig. 2 veranschaulicht ein alternatives Ausführungsbeispiel der Erfindung, bei dem die Betriebsbremse elektromechanisch und die Feststellbremse elektropneumatisch realisiert ist. Die Ausbildung, die Anschlüsse und Verschaltung der Bremspedaleinrichtung 18 entsprechen derjenigen aus Fig. 1. Das Vorderachsbremssteuermodul 24' ist jedoch nunmehr rein elektrisch ausgebildet. Pneumatische Anschlüsse sind daher entfallen. Das Vorderachsbremssteuermodul 24' ist über elektrische Leitungen 36' mit elektromechanischen Stellorganen 96' zum Betätigen der Radbremsen an den Rädern 20 der Vorderachse verbunden. Das Vorderachsbremssteuermodul 24' weist eine eigenständige elektrische Energieversorgung in Form einer Batterie B1 auf. Im Übrigen entsprechen die Anschlüsse und Verschaltung des Vorderachsbremssteuermodul 24' dem Vorderachsbremssteuermodul 24 gemäß Fig. 1.

Das Hinterachsbremssteuerrüodul 52' ist ebenfalls nunmehr rein elektrisch ausgebildet. Pneumatische Anschlüsse sind daher entfallen, einschließlich der pneumatischen Anschlüssen zu einem Anhängersteuerventil und folglich auch elektrischer Anschlüsse zu einem etwaigen Anhängersteuerventil. Das Hinterachsbremssteuermodul 52' ist über elektrische Leitungen 102' mit elektromechanischen Stellorganen 98' zum Betätigen der Radbremsen an den Rädern 56 der Hinterachse verbunden. Das Hinterachsbremssteuermodul 52' weist eine eigenständige elektrische Energieversorgung in Form einer Batterie B2 auf. Im Übrigen entsprechen die elektrischen Anschlüsse und Verschaltung des Hinterachsbremssteuermodul 52' dem Hinterachsbremssteuermodul 52 gemäß Fig. 1.

Die Feststellbremssteuereinheit 94' ist hingegen nunmehr nicht mehr rein elektrisch sondern elektropneumatisch ausgebildet. Sie ist über eine Druckluftleitung 26' mit dem Druckluftvorratsbehälter 74 verbunden. Die Feststellbremssteuereinheit 94' ist über Druckluftleitungen 112 mit Federspeicherbremszylindern 113 an den Rädern 20 der Vorderachse verbunden. Die Feststellbremssteuereinheit 94' ist ferner über Druckluftleitungen 114 mit Federspeicherbremszylindern 115 an den Rädern 56 der Hinterachse verbunden. Diese Federspeicherbremszylinder 113 und 115 stellen eine von der Feststellbremssteuereinheit 94' gesteuerte Feststellbremsfunktion vorzugsweise an beiden Achsen - alternativ jedoch nur an einer Achse - bereit. Eine Datenleitung 116 verbindet die Feststellbremssteuereinheit 94' mit dem Hinterachsbremssteuermodul 52' für eine Datenkommunikation zwischen der. Feststellbremssteuereinheit 94' und dem Hinterachsbremssteuermodul 52'. Im Übrigen entsprechen die elektrischen Anschlüsse und Verschaltung der Feststellbremssteuereinheit 94' der Feststellbremssteuereinheit 94 gemäß Fig. 1.

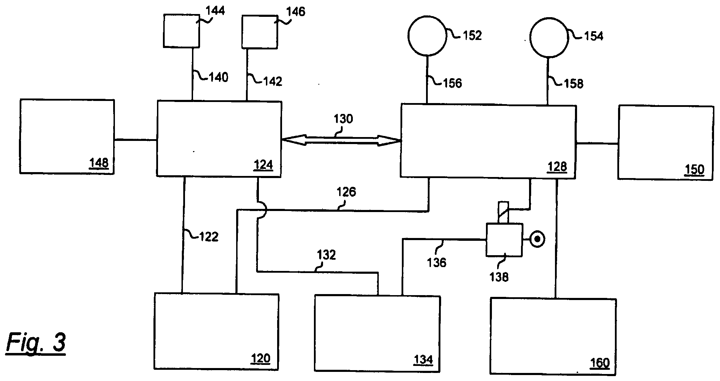

Fig. 3 veranschaulicht ein weiteres Ausführungsbeispiel der Erfindung in Form eines Blockdiagramms. Ein Bremswertgeber 120 einer (nicht dargestellten) Bremspedaleinrichtung ist über eine elektrische Leitung 122 mit einer Betriebsbremssteuereinheit 124 eines elektronischen Bremssystems verbunden. Ferner ist der Bremswertgeber 120 über eine elektrische Leitung 126 elektrisch mit einer Feststellbremssteuereinheit 128 verbunden. Die Betriebsbremssteuereinheit 124 und die Feststellbremssteuereinheit 128 sind über einen Datenbus 130 zum wechselseitigen Datenaustausch miteinander verbunden. Darüber hinaus ist die-Betriebsbremssteuereinheit 124 über eine elektrische Leitung 132 mit einem Anhängersteuerventil 134 elektrisch verbunden. Das Anhängersteuerventil 134 ist über eine Druckluftleitung 136 mit einer elektrisch betätigbaren Ventileinrichtung 138 verbunden. Die Ventileinrichtung 136 ist schließlich mit einem Druckluftvorratsbehälter (nicht dargestellt) verbunden.

Die Betriebsbremssteuereinheit 124 ist über elektrische Leitungen 140, 142 mit Ventilen 144 zur Druckluftversorgung von an der Vorderachse eines Fahrzeugs vorgesehenen Bremszylindern bzw. mit Ventilen 146 zur Druckluftversorgung der an der Hinterachse eines Fahrzeugs vorgesehenen Bremszylinder verbunden.

Die Betriebsbremssteuereinheit 124 ist mit einer ersten elektrischen Energieversorgung 148 verbunden. Die Feststellbremssteuereinheit 128 ist mit einer zweiten elektrischen Energieversorgung 150 verbunden.

Die Feststellbremssteuereinheit 128 ist ferner mit elektromechanischen Stellorganen 152 für die Vorderachse des Fahrzeugs und elektromechanischen Stellorganen 154 für die Hinterachse des Fahrzeugs elektrisch über elektrische Leitungen 156, 158 verbunden. Ferner ist die Feststellbremssteuereinheit 128 mit einer elektrischen Betätigungseinrichtung 160 in Form eines Signalgebers verbunden.

Das in Fig. 3 dargestellte Ausführungsbeispiel entspricht weitgehend dem in Fig. 1 dargestellten, jedoch mit Vereinfachungen in Bezug auf die elektronischen Komponenten der Betriebsbremse, die bei dem Ausführungsbeispiel gemäß Fig. 3 vereinfachend in der Betriebsbremssteuereinheit 124 untergebracht sind. Diese Betriebsbremssteuereinheit 124 fasst die Steuerungslogiken des Vorderachsbremssteuermoduls 24 und des Hinterachsbremssteuermoduls 52 des Ausführungsbeispiels gemäß Fig. 1 zusammen.

Die in Fig. 3 dargestellte Bremsanlage besteht im Wesentlichen aus zwei Teilsystemen. Das erste Teilsystem betrifft die Betriebsbremse, welche als elektronisches Bremssystem ausgestaltet ist. Die Betriebsbremssteuereinheit 124 steuert, wie im Zusammenhang mit Fig. 1 erläutert, die Betriebsbremsventile 144, 146 für die Vorderachse und die Hinterachse des Fahrzeugs sowie ggf. das Anhängersteuerventil 134 an. Die Betriebsbremssteuereinheit 124 liest ferner einen ersten elektrischen Kreis des Bremswertgebers ein, d.h. erfasst einen von dem Bremswertgeber erzeugten Wert. Die Betriebsbremssteuereinheit 124 wird eigenständig aus der elektrischen Energieversorgung 148 versorgt.

Das zweite Teilsystem betrifft die Feststellbremse. Die Feststellbremssteuereinheit 128 nimmt, wie bereits im Zusammenhang mit dem Ausführungsbeispiel gemäß Fig.1 erläutert, das Einbremsen der Vorderachse über die das bzw. die Stellorgane 152 - soweit diese vorgesehen sind - und das Einbremsen der Hinterachse über das bzw. die Stellorgane 154 und das Einbremsen des Anhängers über das Anhängersteuerventil 134 - soweit dies vorgesehen ist - vor.

Das Einbremsen der Räder der Vorderachse bzw. der Hinterachse erfolgt entweder durch elektromotorische Zuspannung der Bremsen mittels der elektromechanischen Stellorgane 152, 154 oder durch Entlüften von Federspeicherbremszylindern. Das Einbremsen eines Anhängers erfolgt durch Entlüften eines Entlüftungsanschlusses am Anhängersteuerventil 134. Die FeststellbremsSteuereinheit 128 liest einen zweiten Kreis des Bremswertgebers 120 ein. Die Feststellbremssteuereinheit 128 liest darüber hinaus das Signal der elektrischen Betätigungseinrichtung 160 zum Betätigen der Feststellbremse ein. Die Feststellbremssteuereinheit 128 wird aus der zweiten elektrischen Energieversorgung 150 versorgt.

Die Betriebsbremssteuereinheit 124 und die Feststellbremssteuereinheit 128 kommunizieren miteinander über den Datenbus 130. Durch diese Kommunikation können Ausfälle in einem der beiden Teilsysteme mitgeteilt werden, so dass das jeweils andere Teilsystem die Aufgaben des ausgefallenen Teilsystems übernehmen kann. Bei jedem Einzelfehler in der Betriebsbremsanlage ist über die Betätigungsorgane der Feststellbremse, insbesondere die Stellorgane 152, 154 eine Hilfsbremswirkung über das Feststellbrems-Teilsystem weiterhin gegeben.

In dem in Fig. 3 gezeigten Ausführungsbeispiel sind die Stellorgane 152, 154 als elektromechanische Stellorgane dargestellt. Alternativ können auch elektromechanische Ventileinheiten eingesetzt werden. Diese elektromechanische Ventileinheiten steuern in Erwiderung auf ein elektrisches Steuersignal pneumatische Drücke auf Federspeicherbremszylinder aus, die im Falle einer Entlüftung der Federspeicherbremszylinder eine in den Speicherfedern gespeicherte Federkraft freisetzen, mittels der mechanische Bewegungen in den Radbremsen zum Bremsen bzw. Feststellen der angetriebenen Räder oder einer Antriebswelle ausgeführt werden.

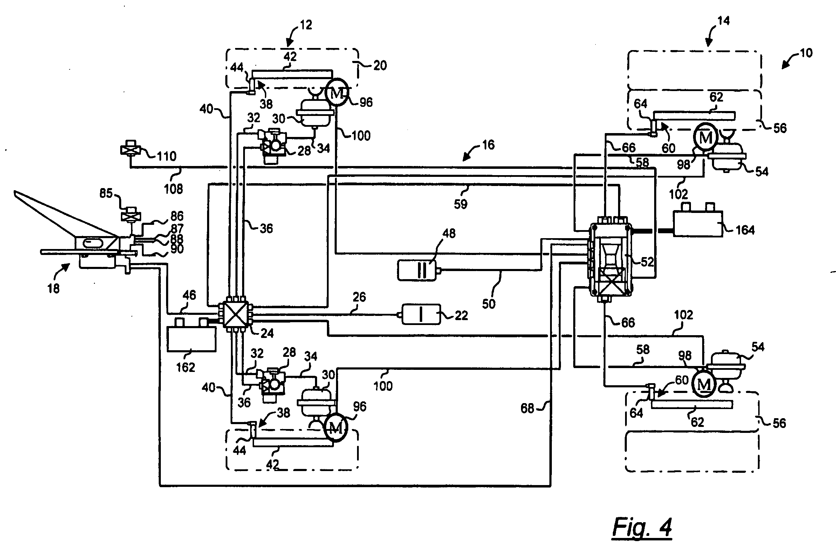

Fig. 4 zeigt eine weitere Bremsanlage, die weitgehend der in Fig. 1 gezeigten Bremsanlage entspricht. Gleiche Bezugszeichen bezeichnen daher gleiche Bauteile. In Bezug auf diese gleichen Bauteile wird auf die obigen Ausführungen Bezug genommen. Unterschiede werden nachfolgend näher erläutert. Zur Vereinfachung wurde das Anhängersteuerventil 72 nebst den zum Anhängersteuerventil 72 führenden Leitungen und den entsprechenden Anschlüssen 78, 80, 82 weggelassen.

Eine Besonderheit gegenüber dem in Fig. 1 gezeigten Ausführungsbeispiel besteht jedoch darin, dass die Feststellbremseinrichtung der Bremsanlage gemäß Fig. 4 keine eigenständige Feststellbremssteuereinrichtung aufweist. Die Steuerungen der Stellorgane 96, 98 sind vielmehr in dem Vorderachsbremssteuermodul 24 und in dem Hinterachsbremssteuermodul 52 untergebracht. Bei dieser Bremsanlage weist zudem sowohl das Vorderachsbremssteuermodul 24 als auch das Hinterachsbremssteuermodul 52 jeweils eine eigene elektrische Energieversorgung 162, 164 auf. Somit sind das Vorderachsbremssteuermodul 24 und das Hinterachsbremssteuermodul 52 im Hinblick auf die elektrische Energieversorgung voneinander unabhängig.

Zu beachten ist, dass die Stellorgane 98 der Räder 56 der Hinterachse 14 an dem Vorderachsbremssteuermodul 24 angeschlossen sind, während die Stellorgane 96 der Räder 20 der Vorderachse 12 an dem Hinterachsbremssteuermodul 52 angeschlossen sind. Bei Ausfall eines Versorgungskreises, bspw. des Hinterachsbremssteuermoduls 52 oder der dazu gehörenden elektrischen Energieversorgung 164 können zwar die Betriebsbremszylinder 54 der Hinterachse 14 nicht mehr angesteuert werden. Jedoch können die Stellorgane 98 der Räder 56 der Hinterachse 14 vom Vorderachsbremssteuermodul 24 angesteuert werden. Das Vorderachsbremssteuermodul 24 erkennt einen Ausfall des Hinterachsbremssteuermoduls 52 aufgrund einer veränderten bzw. ausgefallenen Kommunikation über die Datenleitung 59, über welche das Vorderachsbremssteuermodul 24 mit dem Hinterachsbremsteuermodul 52 kommuniziert.

Nachdem das Vorderachsbremssteuermodul 24 einen derartigen Ausfall erkannt hat, betätigt es die Stellorgane 98 der Räder 56 der Hinterachse 14, wenn vom Fahrer ein Bremsanforderungssignal über die Bremsbetätigungseinrichtung 18 erzeugt wird. Zugleich wird dem Fahrer der Ausfall des zweiten Betriebsbremskreises optisch und/oder akustisch angezeigt.

Bei einem Ausfall des ersten Bremskreises übernimmt das Hinterachsbremssteuermodul 52 in analoger Weise die Ansteuerung der Stellorgane 96.

Bei Ausfall eines Bremskreises kann somit immer noch an allen Rädern 20, 56 gebremst werden. Ferner kann auch bei Ausfall einer Achssteuereinheit die Funktion der Feststellbremse zumindest an einer Achse gewährleistest werden.

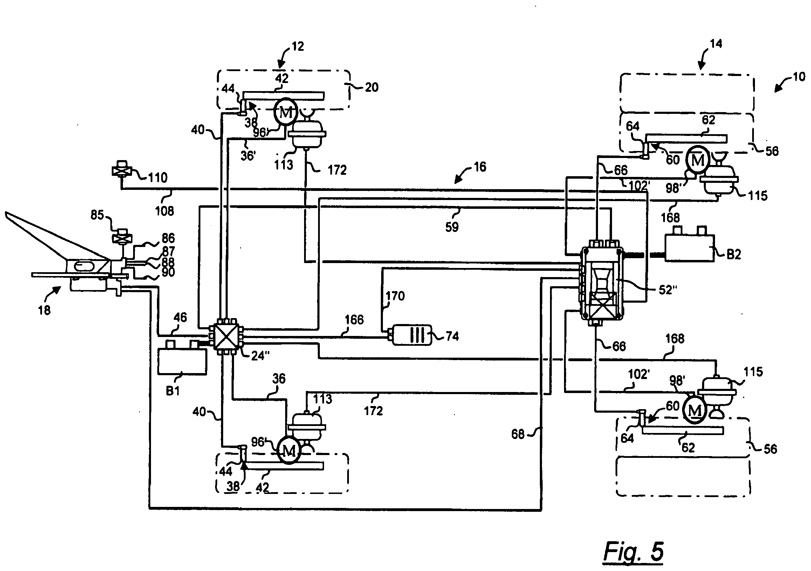

Fig. 5 zeigt eine weitere Bremsanlage, bei der wiederum die Betriebsbremse elektromechanisch und die Feststellbremse elektropneumatisch realisiert ist. Die Ausbildung, die Anschlüsse und Verschaltung der Bremspedaleinrichtung 18 entsprechen wiederum derjenigen aus Fig. 1, 2 bzw. 4. Jedoch steuert das Vorderachsbremssteuermodul 24" die (elektromechanische) Betriebsbremse an der Vorderachse und die (elektropneumatische) Feststellbremse an der Hinterachse, während das Hinterachsbremssteuermodul 52" die (elektromechanische) Betriebsbremse an der Hinterachse und die (elektropneumatische) Feststellbremse an der Vorderachse steuert. Sowohl das Vorderachsbremssteuermodul 24" als auch das Hinterachsbremssteuermodul 52" weisen elektrische sowie pneumatische Komponenten und Anschlüsse auf.

Das Vorderachsbremssteuermodul 24" ist wiederum über elektrische Leitungen 36' mit elektromechanischen Stellorganen 96' zum Betätigen der Radbremsen an den Rädern 20 der Vorderachse verbunden. Das Vorderachsbremssteuermodul 24" weist ebenfalls eine eigenständige elektrische Energieversorgung in Form der Batterie B1 auf. Darüber hinaus ist das Vorderachsbremssteuermodul 24" über eine Druckluftleitung 166 mit dem Druckluftvorratsbehälter 74 verbunden. Nunmehr ist das Vorderachsbremssteuermodul 24" jedoch über Druckluftleitungen 168 mit den Federspeicherbremszylindern 115 an den Rädern 56 der Hinterachse verbunden. Diese Federspeicherbremszylinder 115 stellen eine von dem Vorderachsbremssteuermodul 24" gesteuerte Feststellbremsfunktion an der Hinterachse bereit. Im Übrigen entsprechen die elektrischen Anschlüsse und Verschaltung des Vorderachsbremssteuermodul 24" dem Vorderachsbremssteuermodul 24' gemäß Fig. 2.

Das Hinterachsbremssteuermodul 52" ist über elektrische Leitungen 102' mit elektromechanischen Stellorganen 98' zum Betätigen der Radbremsen an den Rädern 56 der Hinterachse verbunden. Das Hinterachsbremssteuermodul 52" weist ebenfalls eine eigenständige elektrische Energieversorgung in Form der Batterie B2 auf. Darüber hinaus ist das Hinterachsbremssteuermodul 52" über eine Druckluftleitung 170 mit dem Druckluftvorratsbehälter 74 verbunden. Nunmehr ist das Hinterachsbremssteuermodul 52" jedoch über Druckluftleitungen 172 mit den Federspeicherbremszylindern 113 an den Rädern 20 der Vorderachse verbunden. Diese Federspeicherbremszylinder 113 stellen eine von dem Hinterachsbremssteuermodul 52" gesteuerte Feststellbremsfunktion an der Vorderachse bereit. Im Übrigen entsprechen die elektrischen Anschlüsse und Verschaltung des Hinterachsbremssteuermodul 52" dem Hinterachsbremssteuermodul 52' gemäß Fig. 2.

Durch die somit erreichte Überkreuzlösung der Steuerung der Feststellbremse einer Achse jeweils durch das Bremssteuermodul der anderen Achse wird eine hohe Ausfallsicherheit geschaffen. Selbst wenn ein Bremssteuermodul ausfällt, können immer noch alle Räder beider Achsen eingebremst werden und zwar an einer Achse mittels der Betriebsbremse und an der anderen Achse mittels der Feststellbremse. Ein Ausfall eines Bremssteuermoduls wird vom jeweils anderen Bremssteuermodul dadurch erkannt, dass eine Kommunikation über die Datenleitung 59 nicht mehr ordnungsgemäß erfolgt. Dann übernimmt dieses erkennende Bremssteuermodul die entsprechende angeforderte Bremsfunktion an der entsprechenden Achse. Die Sicherheit im Straßenverkehr kann somit signifikant erhöht werden.

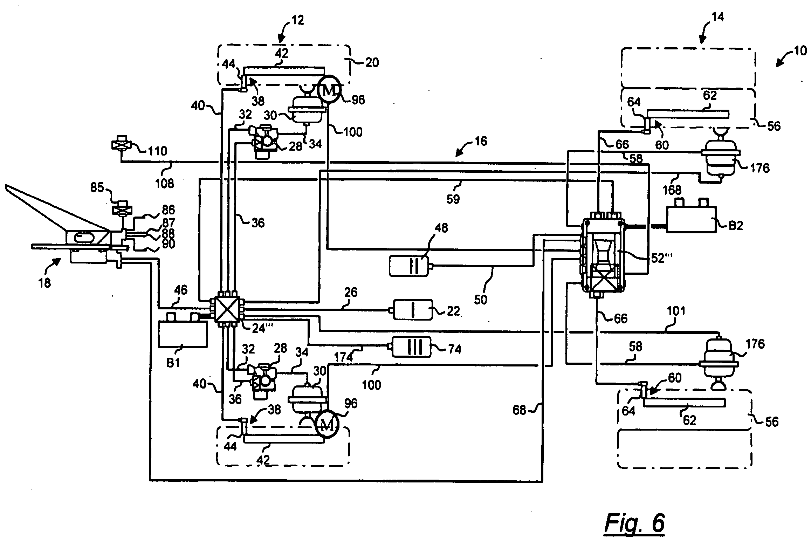

Fig. 6 zeigt eine weitere Bremsanlage, bei der die Betriebsbremse elektropneumatisch und die Feststellbremse elektropneumatisch an der Hinterachse und elektromechanisch an der Vorderachse realisiert ist. Die Ausbildung, die Anschlüsse und Verschaltung der Bremspedaleinrichtung 18 entsprechen wiederum derjenigen aus Fig. 1, 2, 4 bzw. 5. Jedoch steuert das Vorderachsbremssteuermodul 24'" die (elektropneumatische) Betriebsbremse an der Vorderachse und die (elektropneumatische) Feststellbremse an der Hinterachse, während das Hinterachsbremssteuermodul 52"' die (elektropneumatische) Betriebsbremse an der Hinterachse und die (elektromechanische) Feststellbremse an der Vorderachse steuert. Sowohl das Vorderachsbremssteuermodul 24'" als auch das Hinterachsbremssteuermodul 52'" weisen elektrische sowie pneumatische Komponenten und Anschlüsse auf.

Das Vorderachsbremssteuermodul 24'" ist wie gemäß Fig. 1 bzw. 4 über Druckluftleitungen 32 und elektrische Leitungen 36 mit Ventilen 28 zur Bereitstellung einer Antiblockierfunktion an den Radbremsen der Räder 20 der Vorderachse verbunden. Dabei sind die Ventile 28 über Druckluftleitungen 34 mit den Bremszylindern 30 dieser Radbremsen verbunden. Das Vorderachsbremssteuermodul 24'" weist ebenfalls eine eigenständige elektrische Energieversorgung in Form der Batterie B1 auf. Darüber hinaus ist das Vorderachsbremssteuermodul 24"' über die Druckluftleitung 26 mit dem Druckluftvorratsbehälter 22 zur Bereitstellung von Druckluft für die Bremszylinder 30 sowie über eine weitere Druckluftleitung 174 mit dem Druckluftvorratsbehälter 74 verbunden. Ferner ist das Vorderachsbremssteuermodul 24'" über Druckluftleitungen 168 mit kombinierten Federspeicher-/Membranbremszylindern 176 an den Rädern 56 der Hinterachse verbunden. Diese Federspeicher-/Membranbremszylindern 176 stellen mittels eines Federspeicherteils eine von dem Vorderachsbremssteuermodul 24'" gesteuerte Feststellbremsfunktion an der Hinterachse sowie mittels eines Membranteils eine von dem Hinterachssteuermodul 52'" gesteuerte Betriebsbremsfunktion bereit. Die jeweiligen Federspeicherteile werden zum Lösen der Feststellbremse mit Druckluft aus dem Druckluftvorratsbehälter 74 unter Steuerung des Vorderachsbremssteuermodul 24'" belüftet. Zum Einlegen der Feststellbremse werden diese Federspeicherteile entlüftet. Im Übrigen entsprechen die elektrischen Anschlüsse und Verschaltung des Vorderachsbremssteuermodul 24'" dem Vorderachsbremssteuermodul 24 gemäß Fig. 1.

Das Hinterachsbremssteuermodul 52'" ist über Druckluftleitungen 58 mit den Membranteilen der kombinierten Federspeicher-/Membranbremszylindern 176 an den Rädern 56 der Hinterachse verbunden. Das Hinterachsbremssteuermodul 52"' weist wiederum eine eigenständige elektrische Energieversorgung in Form der Batterie B2 auf. Darüber hinaus ist das Hinterachsbremssteuermodul 52"' über eine Druckluftleitung 50 mit dem Druckluftvorratsbehälter 48 verbunden. Das Hinterachsbremssteuermodul 52"' ist, wie im Ausführungsbeispiel gemäß Fig. 4 über elektrische Leitungen 100 mit den elektromechanischen Stellorganen 96 an den Radbremsen der Räder 20 der Vorderachse verbunden, so dass folglich diese Stellorgane 96 von dem Hinterachsbremssteuermodul 52'" gesteuert werden. Im Übrigen entsprechen die elektrischen Anschlüsse und Verschaltung des Hinterachsbremssteuermodul 52'" dem Hinterachsbremssteuermodul 52 gemäß Fig. 4.

Durch die somit erreichte Überkreuzlösung der Steuerung der Feststellbremse einer Achse jeweils durch das Bremssteuermodul der anderen Achse wird wiederum eine hohe Ausfallsicherheit geschaffen. Selbst wenn, wie im Zusammenhang mit dem Ausführungsbeispiel gemäß Fig. 5 erläutert, ein Bremssteuermodul ausfällt, können immer noch alle Räder beider Achsen eingebremst werden und zwar an einer Achse mittels der Betriebsbremse und an der anderen Achse mittels der Feststellbremse. Ein Ausfall eines Bremssteuermoduls wird vom jeweils anderen Bremssteuermodul dadurch erkannt, dass eine Kommunikation über die Datenleitung 59 nicht mehr ordnungsgemäß erfolgt. Dann übernimmt dieses erkennende Bremssteuermodul die entsprechende angeforderte Bremsfunktion an der entsprechenden Achse. Darüber hinaus wird die Sicherheit bei dieser Bremsanlage weiter dadurch erhöht, dass die Feststellbremse als Hybridbremse, d.h. als elektropneumatische sowie elektromechanisch arbeitende Feststellbremse ausgebildet ist. Dank dieser hybriden Ausgestaltung der Feststellbremse kann die Feststellbremse auch dann noch eingelegt werden, wenn der pneumatische oder der elektrische Teil der Feststellbremse ausgefallen ist. Die Sicherheit im Straßenverkehr kann somit weiter erhöht werden.

Alle in der vorstehenden Beschreibung und in den Ansprüchen genannten Merkmale sind auch einzeln mit der erfindungsgemäßen Bremsanlage kombinierbar. Somit ist die Erfindung nicht auf die beschriebenen bzw. beanspruchten Merkmalskombinationen beschränkt. Vielmehr sind alle Kombinationen von Einzelmerkmalen als offenbart zu betrachten.

## Patentansprüche

1. Bremsanlage für ein Fahrzeug (10), insbesondere Nutzfahrzeug, mit einer Betriebsbremseinrichtung (22, 24, 26, 28, 30, 32, 34, 36; 48, 50, 52, 54, 58) zur Bereitstellung einer Betriebsbremsfunktion zum Bremsen des Fahrzeugs und einer Feststellbremseinrichtung (92) zur Bereitstellung einer Feststellbremsfunktion unabhängig von der Betriebsbremseinrichtung (22, 24, 26, 28, 30, 32, 34, 36; 48, 50, 52, 54, 58), wobei das Fahrzeug bei teilweisem oder vollständigem Ausfall einer der beiden Bremseinrichtungen automatisch mittels der jeweils anderen Bremseinrichtung einbremsbar, insbesondere feststellbar, wobei die Betriebsbremseinrichtung einen oder mehrere druckmittelbetriebene Betriebsbremskreise aufweist und die Feststellbremseinrichtung (92) elektromechanisch oder elektropneumatisch betrieben ist und ein oder mehrere elektromechanische Stellorgane (96, 98) oder einen oder mehrere von einer elektropneumatischen Ventileinrichtung gesteuerte Federspeicherbremszylinder aufweist, mittels dem bzw. denen in Erwiderung auf ein elektrisches Steuersignal jeweils eine elektromotorische Kraft erzeugbar bzw. eine Federkraft freisetzbar und mittels dieser Kraft eine mechanische Bewegung zum Bremsen und/oder Feststellen eines angetriebenen Elements, insbesondere eines Rades (12, 14) und/oder einer Antriebswelle, des Antriebsystems des Fahrzeugs (10) ausführbar ist, wobei zur Unterstützung der Betriebsbremsfunktion mittels der Feststellbremsfunktion eine Hilfsbremsfunktion bereitstellbar ist, wobei die Feststellbremseinrichtung (92) bei Ausfall eines, mehrerer oder aller Betriebsbremskreise (22, 24, 26, 28, 30, 32, 34, 36; 48, 50, 52, 54, 58) eine Hilfsbremsfunktion derart bereitstellt, dass das Fahrzeug (10) dosierbar abbremsbar ist, wobei das bzw. die elektromechanischen Stellorgane (96, 98, 152, 154) oder der oder die von der elektropneumatischen Ventileinrichtung gesteuerten Federspeicherbremszylinder an wenigstens eine autarke - separat von wenigstens einer Betriebsbremssteuereinheit (24, 52, 124) des bzw. der Betriebsbremskreise (22, 24, 26, 28, 30, 32, 34, 36, 48, 50, 52, 54, 58) vorgesehenen - Feststellbremssteuereinheit (94, 128) der Feststellbremseinrichtung (92) angeschlossen und von dieser Feststellbremssteuereinheit (94, 128) steuerbar ist bzw. sind, wobei die Feststellbremssteuereinheit (94, 128) und die Betriebsbremssteuereinheit(en) (24, 52, 124) über eine Datenleitung (130), insbesondere einen CAN-Bus, zum Austausch von Daten zwischen der Feststellbremssteuereinheit (94, 128) und der bzw. den Betriebsbremssteuereinheiten (24, 52, 124) verbunden sind, wobei mittels der Feststellbremssteuereinheit (94, 128) die Funktionsfähigkeit des bzw. der Betriebsbremskreise (22, 24, 26, 28, 30, 32, 34, 36; 48, 50, 52, 54, 58) überwachbar und ein etwaiger Ausfall des, eines bzw. aller Betriebsbremskreise (22, 24, 26, 28, 30, 32, 34, 36; 48, 50, 52, 54, 58) feststellbar und die Feststellbremssteuereinheit (94, 128) derart ausgebildet ist, um bei einem derart festgestellten Ausfall die Räder (20, 56) des ausgefallenen Betriebsbremskreises (22, 24, 26, 28, 30, 32, 34, 36; 48, 50, 52, 54, 58) mittels der diesen Rädern (20, 56) zugeordneten elektromechanischen Stellorgane (96, 98, 152, 154) oder Federspeicherbremszylindern, insbesondere in Abhängigkeit des Bremsanforderungssignals, einzubremsen, **dadurch gekennzeichnet, dass** mittels der Betriebsbremssteuereinheit(en) (24, 52, 124) die Funktionsfähigkeit der Feststellbremssteuereinheit (94, 128) und/oder der elektromechanischen Stellorgane (96, 98, 152, 154) oder der elektropneumatischen Ventileinrichtung und/oder der Federspeicherbremszylinder überwachbar und ein etwaiger Ausfall der Feststellbremssteuereinheit (94, 128) und/oder der elektromechanischen Stellorgane (96, 98, 152, 154) oder der elektropneumatischen Ventileinrichtung und/oder der Federspeicherbremszylinder feststellbar und die Betriebsbremssteuereinheit(en) (24, 52, 124) derart ausgebildet ist bzw. sind, um bei einem derart festgestellten Ausfall die vom Ausfall betroffenen Räder (20, 56) mittels des bzw. der diesen Rädern (20, 56) zugeordneten Betriebsbremskreise (22, 24, 26, 28, 30, 32, 34, 36; 48, 50, 52, 54, 58), insbesondere in Abhängigkeit eines Feststellbremssignals, einzubremsen.

2. Bremsanlage nach Anspruch 1, **dadurch gekennzeichnet, dass** eine Bremspedaleinrichtung (18) zum Betätigen des bzw. der Betriebsbremskreise (22, 24, 26, 28, 30, 32, 34, 36; 48, 50, 52, 54, 58) rein elektromechanisch ausgeführt ist zum Erzeugen wenigstens eines elektrischen Bremsanforderungssignals.

3. Bremsanlage nach Anspruch 1 oder 2, **dadurch gekennzeichnet, dass** durch Veränderung des elektrischen Steuersignals das bzw. die elektromechanischen Stellorgane (96, 98, 152, 154) oder der oder die von der elektropneumatischen Ventileinrichtung gesteuerten Federspeicherbremszylinder dosierbar verstellbar ist bzw. sind.

4. Bremsanlage nach einem der Ansprüche 1 bis 3, **dadurch gekennzeichnet, dass** die Feststellbremseinrichtung (92) eine eigenständige elektrische Energieversorgung (150) zur elektrischen Versorgung der Feststellbremssteuereinheit (94, 128) und des bzw. der elektromechanischen Stellorgane (96, 98, 152, 154) oder der elektropneumatischen Ventileinrichtung zur Steuerung der Federspeicherbremszylinder aufweist, die unabhängig von einer elektrischen Energieversorgung (148) der Betriebsbremssteuereinheit (24, 52, 124) ist.

5. Bremsanlage nach einem der Ansprüche 1 bis 4, **dadurch gekennzeichnet, dass** die Feststellbremseinrichtung (92) jeweils wenigstens ein elektromechanisches Stellorgan (98, 96) oder jeweils einen Federspeicherbremszylinder an den Rädern (56, 20) wenigstens einer Hinterachse (14) und wenigstens einer Vorderachse (12) des Fahrzeugs (10), insbesondere an allen mit einem Bremszylinder (30, 54) des bzw. der Betriebsbremskreise (22, 24, 26, 28, 30, 32, 34, 36; 48, 50, 52, 54, 58) bremsbaren Räder (20, 56), aufweist.

6. Bremsanlage nach Anspruch 4 oder 5, **dadurch gekennzeichnet, dass** das Feststellbremssignal mittels eines Feststellbremssignalgebers (110) und/oder mittels eines Rollbremssignalsgebers (85) erzeugbar ist.

7. Bremsanlage nach einem der Ansprüche 4 bis 6, **dadurch gekennzeichnet, dass** die Betriebsbremssteuereinheit(en) (24, 52, 124) derart gesteuert ist bzw. sind, dass auch nach einer Abschaltung einer Zündung des Fahrzeugs die Funktionsfähigkeit des bzw. der Betriebsbremskreise für eine vorbestimmte Zeitdauer aufrechterhalten bleibt.

8. Bremsanlage nach Anspruch 7, **dadurch gekennzeichnet, dass** während der vorbestimmten Zeitdauer die elektrische Energieversorgung (148) der Betriebsbremssteuereinheit(en) (24, 52, 124) mit der/den Betriebsbremssteuereinheit(en) (24, 52, 124) elektrisch verbunden bleibt.

9. Bremsanlage nach Anspruch 7 oder 8, **dadurch gekennzeichnet, dass** vor Ablauf der vorbestimmten Zeitdauer ein optisches und/oder akustisches, insbesondere vom Ablauf dieser Zeitdauer abhängiges, insbesondere zwei- oder mehrstufiges, Warnsignal ausgebbar ist.

10. Bremsanlage nach einem der vorhergehenden Ansprüche, **dadurch gekennzeichnet, dass** die elektromechanischen Stellorgane (96, 98, 152, 154) der Räder (56) einer ersten Achse, insbesondere der Hinterachse (14), an eine erste Betriebsbremssteuereinheit (24) eines ersten Betriebsbremskreises (22, 24, 26, 28, 30, 32, 34, 36) angeschlossen und von dieser Steuereinheit (24) steuerbar sind und die elektromechanischen Stellorgane (96, 98, 152, 154) der Räder (20) einer zweiten Achse (12), insbesondere der Vorderachse, an eine zweite Betriebsbremssteuereinheit (52) eines zweiten Betriebsbremskreises (48, 50, 52, 54, 58) angeschlossen und von dieser Steuereinheit (52) steuerbar sind.

11. Bremsanlage nach Anspruch 10, **dadurch gekennzeichnet, dass** der erste Betriebsbremskreis (22, 24, 26, 28, 30, 32, 34, 36) ein Bremskreis zum Bremsen der Räder (20) der Vorderachse(n) (12) ist und die erste Betriebsbremssteuereinheit (24) zur Steuerung der Betriebsbremsen der Vorderachse(n) (12) vorgesehen ist und der zweite Betriebsbremskreis (48, 50, 52, 54, 58) ein Bremskreis zum Bremsen der Räder (56) der Hinterachse(n) (14) ist und die zweite Betriebsbremssteuereinheit (24) zur Steuerung der Betriebsbremsen der Hinterachse(n) (14) vorgesehen ist.

12. Bremsanlage nach einem der Ansprüche 1 bis 9, **dadurch gekennzeichnet, dass** die Betriebsbremseinrichtung elektromechanisch betrieben ist und mehrere elektromechanische Stellorgane (96', 98') an den Rädern (20) einer ersten Achse (12) und an den Rädern (56) einer zweiten Achse (14) aufweist, wobei mittels der Stellorgane (96', 98') in Erwiderung auf ein elektrisches Steuersignal jeweils eine elektromotorische Kraft erzeugbar und mittels dieser Kraft eine mechanische Bewegung zum Bremsen des jeweils zugeordneten Rades (20, 56) ausführbar ist und an den Rädern (20) der ersten Achse (12), insbesondere der Vorderachse, und/oder an den Rädern (56) der zweiten Achse (14), insbesondere der Hinterachse, jeweils Federspeicherbremszylinder (113, 115) vorgesehen sind.

13. Bremsanlage nach Anspruch 12, **dadurch gekennzeichnet, dass** die elektromechanischen Stellorgane (96') an den Rädern (20) der ersten Achse (12) an eine erste Betriebsbremssteuereinheit (24') angeschlossen und von dieser Steuereinheit (24') steuerbar sind und die elektromechanischen Stellorgane (98') an den Rädern (56) der zweiten Achse (14) an eine zweite Betriebsbremssteuereinheit (52') angeschlossen und von dieser Steuereinheit (52') steuerbar sind und die Federspeicherbremszylinder (113, 115) mit einer Feststellbremssteuereinheit (94') pneumatisch verbunden sind zum Einlegen bzw. Lösen der Federspeicherbremszylinder (113, 115).

14. Bremsanlage nach Anspruch 12, **dadurch gekennzeichnet, dass** die elektromechanischen Stellorgane (96') an den Rädern (20) der ersten Achse (12) an eine erste Betriebsbremssteuereinheit (24") angeschlossen und von dieser Steuereinheit (24") steuerbar sind und die elektromechanischen Stellorgane (98') an den Rädern (56) der zweiten Achse (14) an eine zweite Betriebsbremssteuereinheit (52") angeschlossen und von dieser Steuereinheit (52") steuerbar sind und die Federspeicherbremszylinder (113) an den Rädern (20) der ersten Achse (12) mit der zweiten Betriebsbremssteuereinheit (52") und die Federspeicherbremszylinder (115) an den Rädern (56) der zweiten Achse (14) mit der ersten Betriebsbremssteuereinheit (24') pneumatisch verbunden sind zum Einlegen bzw. Lösen der Federspeicherbremszylinder.

15. Bremsanlage nach einem der Ansprüche 1 bis 9, **dadurch gekennzeichnet, dass** die Betriebsbremseinrichtung elektropneumatisch betrieben ist und die Feststellbremseinrichtung elektromechanisch an den Rädern (20) der ersten Achse (12) und elektropneumatisch an den Rädern (56) der zweiten Achse (14) betrieben ist, wobei der Betriebsbremseinrichtung zugeordnete Bremszylinder (30) an den Rädern (20) der ersten Achse (12) pneumatisch mit einer ersten Betriebsbremssteuereinheit (24"') und der Betriebsbremseinrichtung zugeordnete kombinierte Federspeicher/Membranbremszylinder (176) an den Rädern (56) der zweiten Achse (14) mit ihrem jeweiligen Membranteil pneumatisch mit einer zweiten Betriebsbremssteuereinheit (52"') verbunden sind, wobei Federspeicherteile der kombinierten Federspeicher-/Membranbremszylinder (176) pneumatisch mit der ersten Betriebsbremssteuereinheit (24"') verbunden sind und wobei elektromechanische Stellorgane (96) an den Rädern (20) der ersten Achse (12) an die zweite Betriebsbremssteuereinheit (52"') angeschlossen sind.

## Claims

1. Brake system for a vehicle (10), in particular a utility vehicle, having a service brake device (22, 24, 26, 28, 30, 32, 34, 36; 48, 50, 52, 54, 58) for making available a service braking function for braking the vehicle and a parking brake device (92) for making available a parking braking function independently of the service brake device (22, 24, 26, 28, 30, 32, 34, 36; 48, 50, 52, 54, 58), it being possible, when one of the two brake devices fails partially or completely, for the vehicle to be automatically braked, in particular arrested, by means of the respective other brake device, the service brake device having one or more pressure-medium-operated service brake circuits, and the parking brake device (92) being operated electro-mechanically or electro-pneumatically and having one or more electro-mechanical actuator elements (96, 98) or one or more spring-loaded brake cylinders which are controlled by an electro-pneumatic valve device and by means of which, in response to an electrical control signal, an electro-motive force can be generated or a spring force can be respectively released, and a mechanical movement for braking and/or arresting a driven element, in particular a wheel (12, 14) and/or a drive shaft, of the drive system of the vehicle (10) can be carried out by means of this force, it being possible to make available an auxiliary braking function by means of the parking braking function in order to assist the service braking function, the parking brake device (92) making available an auxiliary braking function in the event of failure of one or more or all of the service brake circuits (22, 24, 26, 28, 30, 32, 34, 36; 48, 50, 52, 54, 58), in such a way that the vehicle (10) can be braked in a metered fashion, the electro-mechanical actuator element or elements (96, 98, 152, 154) or the spring-loaded brake cylinder or cylinders controlled by the electro-pneumatic valve device being connected to at least one autonomous parking brake control unit (94, 128), provided separately from at least one service brake control unit (24, 52, 124) of the service brake circuit or circuits (22, 24, 26, 28, 30, 32, 34, 36; 48, 50, 52, 54, 58), of the parking brake device (92), and being controllable by said parking brake control unit (94, 128), the parking brake control unit (94, 128) and the service brake control unit or units (24, 52, 124) being connected via a data line (130), in particular a CAN bus, for exchanging data between the parking brake control unit (94, 128) and the service brake control unit or units (24, 52, 124), the functional capability of the service brake circuit or circuits (22, 24, 26, 28, 30, 32, 34, 36; 48, 50, 52, 54, 58) being monitorable, and any failure in the service brake circuit or one service brake circuit or all the service brake circuits (22, 24, 26, 28, 30, 32, 34, 36; 48, 50, 52, 54, 58) being detectable, by means of the parking brake control unit (94, 128), and the parking brake control unit (94, 128) being embodied in such a way that, in the event of a failure being thus detected, the wheels (20, 56) of the failed service brake circuit (22, 24, 26, 28, 30, 32, 34, 36; 48, 50, 52, 54, 58) are braked, in particular as a function of the braking request signal, by means of the electro-mechanical actuator elements (96, 98, 152, 154) or spring-loaded brake cylinders which are assigned to these wheels (20, 56), **characterized in that** the functional capability of the parking brake control unit (94, 128) and/or of the electro-mechanical actuator elements (96, 98, 152, 154) or of the electro-pneumatic valve device and/or of the spring-loaded brake cylinders can be monitored, and any failure in the parking brake control unit (94, 128) and/or the electro-mechanical actuator elements (96, 98, 152, 154) or the electro-pneumatic valve device and/or the spring-loaded brake cylinders can be detected, by means of the service brake control unit or units (24, 52, 124), and the service brake control unit or units (24, 52, 124) is/are embodied in such a way that, in the event of a failure being thus detected, the wheels (20, 56) which are affected by the failure are braked, in particular as a function of a parking brake signal, by means of the service brake circuit or circuits (22, 24, 26, 28, 30, 32, 34, 36; 48, 50, 52, 54, 58) which are assigned to these wheels (20, 56).

2. Brake system according to Claim 1, **characterized in that** a brake pedal device (18) for activating the service brake circuit or circuits (22, 24, 26, 28, 30, 32, 34, 36; 48, 50, 52, 54, 58) is embodied in a purely electro-mechanical fashion in order to generate at least one electrical braking request signal.

3. Brake system according to Claim 1 or 2, **characterized in that** the electro-mechanical actuator element or elements (96, 98, 152, 154) or the spring-loaded brake cylinder or cylinders controlled by the electro-pneumatic valve device is/are adjustable in a metered fashion by changing the electrical control signal.

4. Brake system according to one of Claims 1 to 3, **characterized in that** the parking brake device (92) has an independent electrical power supply (150) for supplying electricity to the parking brake control unit (94, 128) and the electro-mechanical actuator element or elements (96, 98, 152, 154) or the electro-pneumatic valve device for controlling the spring-loaded brake cylinders, which power supply (150) is independent of an electrical power supply (148) of the service brake control unit (24, 52, 124).

5. Brake system according to one of Claims 1 to 4, **characterized in that** the parking brake device (92) has in each case at least one electro-mechanical actuator element (98, 96) or in each case one spring-loaded brake cylinder on the wheels (56, 20) of at least one rear axle (14) and of at least one front axle (12) of the vehicle (10), in particular on all the wheels (20, 56) which can be braked with a brake cylinder (30, 54) of the service brake circuit or circuits (22, 24, 26, 28, 30, 32, 34, 36; 48, 50, 52, 54, 58).

6. Brake system according to Claim 4 or 5, **characterized in that** the parking brake signal can be generated by means of a parking brake signal generator (110) and/or by means of a rolling brake signal generator (85).

7. Brake system according to one of Claims 4 to 6, **characterized in that** the service brake control unit or units (24, 52, 124) is/are controlled in such a way that, even after an ignition system of the vehicle has been shut down, the functional capability of the service brake circuit or circuits is maintained for a predetermined time period.

8. Brake system according to Claim 7, **characterized in that,** during the predetermined time period, the electrical power supply (148) of the service brake control unit or units (24, 52, 124) continues to be electrically connected to the service brake control unit or units (24, 52, 124).

9. Brake system according to Claim 7 or 8, **characterized in that,** before the predetermined time period has expired, a visual and/or acoustic warning signal, which is, in particular, dependent on the expiry of this time period and is, in particular, a two-stage or multi-stage warning signal, can be output.

10. Brake system according to one of the preceding claims, **characterized in that** the electro-mechanical actuator elements (96, 98, 152, 154) of the wheels (56) of a first axle, in particular of the rear axle (14), are connected to a first service brake control unit (24) of a first service brake circuit (22, 24, 26, 28, 30, 32, 34, 36) and can be controlled by this control unit (24), and the electro-mechanical actuator elements (96, 98, 152, 154) of the wheels (20) of a second axle (12), in particular of the front axle, are connected to a second service brake control unit (52) of a second service brake circuit (48, 50, 52, 54, 58) and can be controlled by this control unit (52).

11. Brake system according to Claim 10, **characterized in that** the first service brake circuit (22, 24, 26, 28, 30, 32, 34, 36) is a brake circuit for braking the wheels (20) of the front axle or axles (12), and the first service brake control unit (24) is provided for controlling the service brakes of the front axle or axles (12), and the second service brake circuit (48, 50, 52, 54, 58) is a brake circuit for braking the wheels (56) of the rear axle or axles (14), and the second service brake control unit (24) is provided for controlling the service brakes of the rear axle or axles (14).

12. Brake system according to one of Claims 1 to 9, **characterized in that** the service brake device is operated electro-mechanically and has a plurality of electro-mechanical actuator elements (96', 98') at the wheels (20) of a first axle (12) and at the wheels (56) of a second axle (14), it being possible to generate, in response to an electrical control signal, an electro-motive force in each case by means of the actuator elements (96', 98') and to execute, by means of this force, a mechanical movement for braking the respectively assigned wheel (20, 56), and spring-loaded brake cylinders (113, 115) being provided at each of the wheels (20) of the first axle (12), in particular of the front axle, and/or at each of the wheels (56) of the second axle (14), in particular of the rear axle.

13. Brake system according to Claim 12, **characterized in that** the electro-mechanical actuator elements (96') at the wheels (20) of the first axle (12) are connected to a first service brake control unit (24') and can be controlled by this control unit (24'), and the electro-mechanical actuator elements (98') at the wheels (56) of the second axle (14) are connected to a second service brake control unit (52') and can be controlled by this control unit (52'), and the spring-loaded brake cylinders (113, 115) are pneumatically connected to a parking brake control unit (94') in order to engage or release the spring-loaded brake cylinders (113, 115).

14. Brake system according to Claim 12, **characterized in that** the electro-mechanical actuator elements (96') at the wheels (20) of the first axle (12) are connected to a first service brake control unit (24") and can be controlled by this control unit (24"), and the electro-mechanical actuator elements (98') at the wheels (56) of the second axle (14) are connected to a second service brake control unit (52") and can be controlled by this control unit (52"), and the spring-loaded brake cylinders (113) at the wheels (20) of the first axle (12) are pneumatically connected to the second service brake control unit (52"), and the spring-loaded brake cylinders (115) at the wheels (56) of the second axle (14) are pneumatically connected to the first service brake control unit (24') in order to engage or release the spring-loaded brake cylinders.

15. Brake system according to one of Claims 1 to 9, **characterized in that** the service brake device is operated electro-pneumatically, and the parking brake device is operated electro-mechanically at the wheels (20) of the first axle (12) and electro-pneumatically at the wheels (56) of the second axle (14), brake cylinders (30), assigned to the service brake device, at the wheels (20) of the first axle (12) being pneumatically connected to a first service brake control unit (24'''), and combined spring-loaded/diaphragm brake cylinders (176), assigned to the service brake device, at the wheels (56) of the second axle (14) being pneumatically connected by their respective diaphragm part to a second service brake control unit (52'''), spring-loaded parts of the combined spring-loaded/diaphragm brake cylinders (176) being pneumatically connected to the first service brake control unit (24'''), and electro-mechanical actuator elements (96) at the wheels (20) of the first axle (12) being connected to the second service brake control unit (52''').

## Revendications

1. Installation de freinage pour un véhicule (10), notamment pour un véhicule utilitaire, avec un dispositif de frein de service (22, 24, 26, 28, 30, 32, 34, 36 ; 48, 50, 52, 54, 58) permettant de mettre à disposition une fonction de frein de service permettant de freiner le véhicule et avec un dispositif de frein de stationnement (92) permettant de mettre à disposition une fonction de frein de stationnement indépendamment du dispositif de frein de service (22, 24, 26, 28, 30, 32, 34, 36 ; 48, 50, 52, 54, 58), le véhicule pouvant être automatiquement freiné, notamment arrêté, respectivement à l'aide de l'autre dispositif de frein en cas de panne partielle ou totale d'un des deux dispositifs de frein, le dispositif de frein de service comportant un ou plusieurs circuits de frein de service entraînés par un moyen de pression et le dispositif de frein de stationnement (92) étant entraîné de façon électromécanique ou électropneumatique et comportant un ou plusieurs organes de réglage électromécaniques (96, 98) ou un ou plusieurs cylindres de frein à ressort accumulateur commandés par un dispositif de soupape électropneumatique à l'aide duquel et/ou desquels, respectivement, en réponse à un signal de commande électrique, une force électromotorisée peut être produite et/ou une force de ressort peut être libérée et un mouvement mécanique permettant de freiner et/ou d'arrêter un élément entraîné, notamment une roue (12, 14) et/ou un arbre d'entraînement, du système d'entraînement du véhicule (10) pouvant être exécuté à l'aide de cette force, une fonction de frein d'assistance pouvant être mise à disposition pour soutenir la fonction de frein de service à l'aide de la fonction de frein de stationnement, le dispositif de frein de stationnement (92) mettant à disposition une fonction de frein d'assistance en cas de panne d'un ou de plusieurs ou de tous les circuits de frein de service (22, 24, 26, 28, 30, 32, 34, 36 ; 48, 50, 52, 54, 58), de façon à pouvoir freiner le véhicule (10) de façon dosable, le ou les organes de réglage électromécaniques (96, 98, 152, 154) ou le ou les cylindres de frein à ressort accumulateur commandés par le dispositif de soupape électropneumatique étant raccordé (s) à au moins une unité de commande de frein de stationnement (94, 128) autonome du dispositif de frein de stationnement (92) - prévue séparément d'au moins une unité de commande de frein de service (24, 52, 124) du ou des circuits de frein de service (22, 24, 26, 28, 30, 32, 34, 36 ; 48, 50, 52, 54, 58) et pouvant être commandé(s) par cette unité de commande de frein de stationnement (94, 128), l'unité de commande de frein de stationnement (94, 128) et la ou les unités de commande de frein de service (24, 52, 124) étant reliées via un câble de données (130), notamment un bus CAN, en vue d'échanger des données entre l'unité de commande de frein de stationnement (94, 128) et la ou les unités de commande de frein de service (24, 52, 124), la capacité fonctionnelle du ou des circuits de frein de service (22, 24, 26, 28, 30, 32, 34, 36 ; 48, 50, 52, 54, 58) pouvant être surveillée à l'aide de l'unité de commande de frein de stationnement (94, 128) et une éventuelle panne du, d'un ou de tous les circuits de frein de service (22, 24, 26, 28, 30, 32, 34, 36 ; 48, 50, 52, 54, 58) pouvant être détectée et l'unité de commande de frein de stationnement (94, 128) étant réalisée de telle sorte qu'en cas de panne détectée de la sorte, les roues (20, 56) du circuit de frein de service (22, 24, 26, 28, 30, 32, 34, 36 ; 48, 50, 52, 54, 58) défaillant sont freinées à l'aide des organes de réglage électromécaniques (96, 98, 152, 154) associés à ces roues (20, 56) ou des cylindres de frein à ressort accumulateur, notamment en fonction du signal de demande de freinage, **caractérisée en ce que** la capacité fonctionnelle de l'unité de commande de frein de stationnement (94, 128) et/ou des organes de réglage électromécaniques (96, 98, 152, 154) ou du dispositif de soupape électropneumatique et/ou des cylindres de frein à ressort accumulateur peut être surveillée à l'aide de la ou des unités de commande de frein de service (24, 52, 124) et une éventuelle panne de l'unité de commande de frein de stationnement (94, 128) et/ou des organes de réglage électromécaniques (96, 98, 152, 154) ou du dispositif de soupape électropneumatique et/ou des cylindres de frein à ressort accumulateur peut être détectée et la ou les unités de commande de frein de service (24, 52, 124) est/sont réalisée(s) de telle sorte qu'en présence d'une panne ainsi constatée, les roues (20, 56) concernées par la panne sont freinées à l'aide du ou des circuits de frein de service (22, 24, 26, 28, 30, 32, 34, 36 ; 48, 50, 52, 54, 58) associés à ces roues (20, 56), notamment en fonction d'un signal de frein de stationnement.

2. Installation de freinage selon la revendication 1, **caractérisée en ce qu'**un système de pédale de frein (18) permettant d'actionner le ou les circuits de frein de service (22, 24, 26, 28, 30, 32, 34, 36 ; 48, 50, 52, 54, 58) est réalisé de façon purement électromécanique pour produire au moins un signal électrique de demande de freinage.

3. Installation de freinage selon la revendication 1 ou 2, **caractérisée en ce que** la modification du signal de commande électrique permet de régler de façon dosable le ou les organes de réglage électromécaniques (96, 98, 152, 154) ou le ou les cylindres de frein à ressort accumulateur commandés par le dispositif de soupape électropneumatique.

4. Installation de freinage selon l'une quelconque des revendications 1 à 3, **caractérisée en ce que** le dispositif de frein de stationnement (92) comporte une alimentation en énergie électrique (150) autonome permettant de réaliser l'alimentation électrique de l'unité de commande de frein de stationnement (94, 128) et du ou des organes de réglage électromécaniques (96, 98, 152, 154) ou du dispositif de soupape électropneumatique pour commander les cylindres de frein à ressort accumulateur, qui est indépendante d'une alimentation en énergie électrique (148) de l'unité de commande de frein de service (24, 52, 124).

5. Installation de freinage selon l'une quelconque des revendications 1 à 4, **caractérisée en ce que** le dispositif de frein de stationnement (92) comporte respectivement au moins un organe de réglage électromécanique (98, 96) ou respectivement un cylindre de frein à ressort accumulateur prévu au niveau des roues (56, 20) d'au moins un essieu arrière (14) et d'au moins un essieu avant (12) du véhicule (10), notamment au niveau de toutes les roues (20, 56) pouvant être freinées à l'aide d'un cylindre de frein (30, 54) du ou des circuits de frein de service (22, 24, 26, 28, 30, 32, 34, 36 ; 48, 50, 52, 54, 58).

6. Installation de freinage selon la revendication 4 ou 5, **caractérisée en ce que** le signal de frein de stationnement peut être produit à l'aide d'un transmetteur de signal de frein de stationnement (110) et/ou à l'aide d'un transmetteur de signal de frein à rouleau (85).

7. Installation de freinage selon l'une quelconque des revendications 4 à 6, **caractérisée en ce que** la ou les unités de commande de frein de service (24, 52, 124) est/sont commandée(s) de telle sorte que la capacité fonctionnelle du ou des circuits de frein de service est maintenue pendant une durée prédéfinie également après une déconnexion d'un allumage du véhicule.

8. Installation de freinage selon la revendication 7, **caractérisée en ce que** pendant la durée prédéfinie, l'alimentation en énergie électrique (148) de la ou des unités de commande de frein de service (24, 52, 124) reste reliée sur le plan électrique à la ou aux unités de commande de frein de service (24, 52, 124).

9. Installation de freinage selon la revendication 7 ou 8, **caractérisée en ce qu'**avant l'écoulement de la durée prédéfinie, un signal d'avertissement optique et/ou acoustique à deux niveaux ou plus dépendant notamment de l'écoulement de cette durée peut être émis.

10. Installation de freinage selon l'une quelconque des revendications précédentes, **caractérisée en ce que** les organes de réglage électromécaniques (96, 98, 152, 154) des roues (56) d'un premier essieu, notamment de l'essieu arrière (14), sont raccordés à une première unité de commande de frein de service (24) d'un premier circuit de frein de service (22, 24, 26, 28, 30, 32, 34, 36) et peuvent être commandés par cette unité de commande (24) et les organes de réglage électromécaniques (96, 98, 152, 154) des roues (20) d'un deuxième essieu (12), notamment de l'essieu avant, sont raccordés à une deuxième unité de commande de frein de service (52) d'un deuxième circuit de frein de service (48, 50, 52, 54, 58) et peuvent être commandés par cette unité de commande (52).

11. Installation de freinage selon la revendication 10, **caractérisée en ce que** le premier circuit de frein de service (22, 24, 26, 28, 30, 32, 34, 36) est un circuit de frein permettant de freiner les roues (20) du ou des essieux avant (12) et la première unité de commande de frein de service (24) est prévue pour commander les freins de service du ou des essieux avant (12) et le deuxième circuit de frein de service (48, 50, 52, 54, 58) est un circuit de frein permettant de freiner les roues (56) du ou des essieux arrière (14) et la deuxième unité de commande de frein de service (24) est prévue pour commander les freins de service du ou des essieux arrière (14).

12. Installation de freinage selon l'une quelconque des revendications 1 à 9, **caractérisée en ce que** le dispositif de frein de service est entraîné de façon électromécanique et comporte plusieurs organes de réglage électromécaniques (96', 98') au niveau des roues (20) d'un premier essieu (12) et au niveau des roues (56) d'un deuxième essieu (14), une force électromotorisée pouvant respectivement être produite à l'aide des organes de réglage (96', 98') en réponse à un signal de commande électrique et un mouvement mécanique permettant de freiner la roue (20, 56) respectivement associée pouvant être mis en œuvre à l'aide de cette force et des cylindres de frein à ressort accumulateur (113, 115) étant respectivement prévus au niveau des roues (20) du premier essieu (12), notamment de l'essieu avant, et/ou au niveau des roues (56) du deuxième essieu (14), notamment de l'essieu arrière.

13. Installation de freinage selon la revendication 12, **caractérisée en ce que** les organes de réglage électromécaniques (96') sont raccordés à une première unité de commande de frein de service (24') au niveau des roues (20) du premier essieu (12) et peuvent être commandés par cette unité de commande (24') et les organes de réglage électromécaniques (98') sont raccordés à une deuxième unité de commande de frein de service (52') au niveau des roues (56) du deuxième essieu (14) et peuvent être commandés par cette unité de commande (52') et les cylindres de frein à ressort accumulateur (113, 115) sont reliés de façon pneumatique à une unité de commande de frein de stationnement (94') pour serrer et/ou desserrer les cylindres de frein à ressort accumulateur (113, 115).

14. Installation de freinage selon la revendication 12, **caractérisée en ce que** les organes de réglage électromécaniques (96') sont raccordés à une première unité de commande de frein de service (24") au niveau des roues (20) du premier essieu (12) et peuvent être commandés par cette unité de commande (24") et les organes de réglage électromécaniques (98') sont raccordés à une deuxième unité de commande de frein de service (52") au niveau des roues (56) du deuxième essieu (14) et peuvent être commandés par cette unité de commande (52") et les cylindres de frein à ressort accumulateur (113) sont reliés de façon pneumatique à la deuxième unité de commande de frein de service (52") au niveau des roues (20) du premier essieu (12) et les cylindres de frein à ressort accumulateur (115) sont reliés de façon pneumatique à la première unité de commande de frein de service (24') au niveau des roues (56) du deuxième essieu (14) pour serrer et/ou desserrer les cylindres de frein à ressort accumulateur.

15. Installation de freinage selon l'une quelconque des revendications 1 à 9, **caractérisée en ce que** le dispositif de frein de service est entraîné de façon électropneumatique et le dispositif de frein de stationnement est entraîné de façon électromécanique au niveau des roues (20) du premier essieu (12) et de façon électropneumatique au niveau des roues (56) du deuxième essieu (14), des cylindres de frein (30) associés au dispositif de frein de service étant reliés de façon pneumatique à une première unité de commande de frein de service (24''') au niveau des roues (20) du premier essieu (12) et des cylindres de frein à membrane/ressort accumulateur (176) combinés associés au dispositif de frein de service étant reliés, avec leur partie de membrane respective, de façon pneumatique à une deuxième unité de commande de frein de service (52''') au niveau des roues (56) du deuxième essieu (14), les parties de ressort accumulateur des cylindres de frein à membrane/ressort accumulateur (176) combinés étant reliées de façon pneumatique à la première unité de commande de frein de service (24''') et les organes de réglage électromécaniques (96) étant raccordés à la deuxième unité de commande de frein de service (52''') au niveau des roues (20) du premier essieu (12).
